# EUROPÄISCHE PATENTSCHRIFT

(11) **EP 2 668 082 B1**
(45) Veröffentlichungstag und Bekanntmachung des Hinweises auf die Patenterteilung: **07.12.2016**
(21) Anmeldenummer: 11802435.5
(22) Anmeldetag: 23.12.2011
(51) Int. Cl.: E03F 7/00, B61D 35/00

(54) **ABSAUGKUPPLUNG**
SUCTION COUPLING
RACCORD D'ÉVACUATION PAR ASPIRATION

(30) Priorität: 27.01.2011 DE 202011002009 U
(43) Veröffentlichungstag der Anmeldung: 04.12.2013
(73) Patentinhaber: Hugo Vogelsang Maschinenbau GmbH, 49632 Essen (DE)
(72) Erfinder: KRAMPE, Paul, 49632 Essen (Oldenburg) (DE); HESLER, Hans Rainer, 49456 Bakum (DE)
(74) Vertreter: Eisenführ Speiser
(86) Internationale Anmeldenummer: PCT/EP2011/073930
(87) Internationale Veröffentlichungsnummer: WO 2012/100890

(56) Entgegenhaltungen:
- WO-A1-96/36832
- US-B1- 6 240 986

## Beschreibung

Die Erfindung betrifft eine Absaugvorrichtung zum Abführen eines Mischfluids, insbesondere einer Fäkalie aus einem Sammelbehälter, insbesondere einem Fäkalientank eines Schienenfahrzeugs, mit einem Mischfluid-Einlass zur Aufnahme des Mischfluids, der fluidleitend mit einem Anschluss des Sammelbehälters verbindbar ist, einem Mischfluid-Auslass zur Abgabe des Mischfluids, der fluidleitend mit einer Saugleitung verbindbar ist, und einem Strömungskanal, der sich zwischen dem Einlass und dem Auslass erstreckt. Ferner betrifft die Erfindung eine Absaugstation zum Absaugen eines Mischfluids sowie ein Verfahren zum Absaugen eines Mischfluids.

Fahrzeuge, insbesondere Schienenfahrzeuge oder auch andere Last- und Personenfahrzeuge wie beispielsweise Wohnwagen oder Yachten, verfügen häufig zum Sammeln von Fäkalien über Sammelbehälter. Diese Sammelbehälter müssen in regelmäßigen Abständen geleert werden. Zu diesem Zweck weisen Sammelbehälter häufig einen Stutzen beispielsweise an einer Außenseite eines Fahrzeugs auf, an dem eine Schlauchkupplung eines Absaugschlauchs anschließbar ist, so dass die in dem Tank befindlichen Fäkalien mittels Unterdruck absaugbar sind.

Herkömmliche, dem Oberbegriff des unabhängigen Vorrichtungsanspruchs 1 (oder auch des Anspruchs 13) bzw. des unabhängigen Verfahrensanspruchs 14 entsprechende Absaugkupplungen bzw. Absaugvorrichtungen weisen häufig auf der absaugvorrichtungsseitigen Schlauchseite einen Kugelhahn auf, um nach Abschluss des Absaugvorganges den Schlauch so zu verschließen, dass abgesaugte Fäkalien nicht wieder aus dem Schlauch austreten können. Ein solcher Kugelhahn ist jedoch konstruktionsbedingt in einem gewissen Abstand von der Kupplungsfläche zwischen Stutzen und Absaugkupplung angeordnet, so dass sich in einem Totraum zwischen Kupplungsfläche und Kugelhahn Mischfluid (beispielsweise Fäkalien) sammeln kann, welche nach Schließen des Kugelhahns und Abkoppeln des Kupplungsteils von dem Stutzen austreten kann. Bei herkömmlichen Absaugkupplungen beträgt diese austretende Menge bis zu etwa 0,5 I. Ein solches Austreten von Mischfluid (beispielsweise Fäkalien) ist nicht nur aufgrund des schlechten Geruchs ungewünscht, sondern führt auch zu Verschmutzungen der Absaugstationen und ist ebenfalls unter Gesichtspunkten des Gesundheits- und Wasserschutzes als bedenklich einzustufen.

DE 20 2004 019 308 U1 schlägt zur Lösung dieses Problems vor, den Absaugschlauch zwischen Kupplung und Auffangbehälter in einem mittleren Bereich erhöht aufzuhängen und den Schlauchbereich zwischen Kupplung und dem erhöhten Punkt mit einem geringeren Durchmesser auszuführen, so dass in diesem Bereich eine erhöhte Strömungsgeschwindigkeit auftritt. Bei dieser Lösung hat sich allerdings gezeigt, dass Mischfluidreste bzw. Fäkalienreste im Kupplungsstück zurückbleiben und nach dem Abkuppeln ausfließen.

Eine weitere Lösung schlägt DE 10 2007 011 210 B3 vor. Die vorgeschlagene Schlauchkupplung weist zwar ein unmittelbar an der Teilungsebene der Kupplung angeordnetes Verschlusselement auf, jedoch kann auch dann Mischfluid- bzw. Fäkalienrest nach dem Abkuppeln aus dem Stutzen austreten. Um dies zu verhindern schlägt DE 10 2007 011 210 B3 vor, in dem Stutzen eine Membran anzuordnen, die ein Ausfließen der Fäkalien nach dem Abkuppeln aus dem Stutzen verhindert, indem die Membran eine Wand bildet, so dass der Fäkalienrest im Stutzen verbleibt. Zwar ist so ein unmittelbares Austreten der Fäkalie nach dem Abkuppeln verhindert, jedoch kann der Fäkalienrest in dem Stutzen im Winter einfrieren, wodurch ein erneutes Kuppeln verhindert oder zumindest wesentlich erschwert wird. Zudem ist es nachteilig, dass eine solche Membran an jedem Stutzen nachgerüstet werden muss. Eine derartige Nachrüstung ist kostspielig und überaus aufwendig.

Eine weitere Lösung für Schienenfahrzeuge ist in DE 43 35 945 C2 vorgeschlagen. Sie sieht für jeden Sammeltankbehälter in einem Schienenfahrzeug ein zusätzliches Absperrventil vor, das vom Bediener nach Gutdünken zu Beginn des Absaugvorgangs geöffnet und nach Abschluss des Absaugvorgangs geschlossen werden muss. Dabei kommt es auf das Geschick des Bedieners an, ob die Kupplung dann tropffrei entfernt werden kann. Daher kommt es auch bei dieser Ausführung häufig zu einem Austritt von Fäkalien. Zudem ist nachteilhaft, dass das zusätzliche Absperrventil ein erhöhtes Gewicht, eine erhöhte Komplexität sowie höhere Kosten der Absaugkupplung nach sich zieht.

Aufgabe der vorliegenden Erfindung ist es daher, eine bezüglich mindestens eines der genannten Nachteile verbesserte Absaugkupplung anzugeben.

Die vorliegende Erfindung gemäss Anspruch 1 löst die Aufgabe bei einer Absaugvorrichtung der eingangs genannten Art durch einen Verengungskörper, welcher dazu eingerichtet ist, einen Querschnitt des Strömungskanals abschnittsweise oder entlang seiner gesamten Länge zu verringern. Die Erfindung macht sich zunutze, dass bei sinkendem Füllstand Luft durch den Strömungskanal strömt, die zum Entleeren von Mischfluid manipulierbar ist. Vorzugsweise ist der Verengungskörper dazu eingerichtet, den Strömungskanal selektiv zu verengen. So wird erfindungsgemäß in dem verengten Abschnitt eine erhöhte Strömungsgeschwindigkeit der Luft erreicht, wodurch Mischfluid bzw. Fäkalienreste, welche sich im Bereich des Strömungskanals befinden, abgesaugt werden. Zusätzlich entstehen durch die lokale Strömungsbeschleunigung beim Übergang von dem Stutzen, in welchem eine langsame Strömung herrscht, in den Strömungskanal, in welchem eine schnellere Strömung herrscht Turbulenzen, die dafür sorgen, dass auch feste bzw. hochviskose Bestandteile des Mischfluids mitgerissen und abgesaugt werden. Der Effekt dieser Strömung beschränkt sich nicht nur auf den Strömungskanal, sondern vielmehr auch wenigstens abschnittsweise auf einen angekoppelten Stutzen, so dass auch dieser von Mischfluid bzw. Fäkalie befreit wird. Erfindungsgemäss ist der Verengungskörper dazu eingerichtet, einen Querschnitt des Strömungskanals abschnittsweise oder entlang seiner gesamten Länge selektiv zu verringern. Besonders bevorzugt ist der Strömungskanal in einem Gehäuse der Absaugvorrichtung ausgebildet. Ferner ist bevorzugt an dem Mischfluid-Einlass ein Kupplungselement angeordnet, um die Absaugvorrichtung mit einem Stutzen eines Fahrzeugs zu kuppeln. Vorzugsweise ist diese Kupplung als Hebelarmkupplung (sogenannte Kamlok- oder Camlock-Kupplung) ausgebildet.

Gemäß einer ersten bevorzugten Ausführungsform bildet der Verengungskörper wenigstens abschnittsweise eine Wandung des Strömungskanals. Der Strömungskanal ist demnach als Ausnehmung in dem Verengungskörper ausgebildet. Der Verengungskörper kann demnach beispielsweise als separater Körper ausgebildet sein, welcher in ein Gehäuse der Absaugvorrichtung einführbar ist. Beispielsweise ist in einem Gehäuse ein Kanal ausgebildet, welcher im Wesentlichen entsprechend dem Durchmesser eines Stutzens, welcher mit dem Mischfluid-Einlass verbindbar ist, ausgebildet ist. Dieser Kanal kann sich von dem Mischfluid-Einlass bis zum Mischfluid-Auslass erstrecken. Der Verengungskörper ist dann so in diesen Kanal einführbar, bzw. eingeführt, dass er wenigstens abschnittsweise eine Wandung des Strömungskanals bildet.

Weiterhin erfindungsgemäss ist der Verengungskörper relativ zu dem Ein- und/oder Auslass in eine erste und eine zweite Position bewegbar, wobei der Querschnitt des Strömungskanals in der zweiten Position geringer ist als in der ersten Position. So ist es erfindungsgemäß möglich, den Durchmesser des Strömungskanals zu variieren, vorzugweise während eines Absaugvorgangs. So kann der Absaugvorgang zunächst mit einem großen Strömungskanalquerschnitt begonnen werden, so dass ein hoher Volumenstrom erreicht wird. Zum Ende hin kann der Verengungskörper in eine zweite Position bewegt werden, wodurch der Strömungsquerschnitt verengt ist und die oben beschriebenen Effekte der Fluidbeschleunigung und des Absaugens eines Fluidrestes verstärkt erreicht werden. In einer bevorzugten Ausführungsform ist der Querschnitt der zweiten Position halb so groß wie der Querschnitt in der ersten Position. In einer weiteren bevorzugten Ausführungsform ist das Verhältnis zwischen dem Querschnitt einer zweiten Position und dem Querschnitt in der ersten Position eines der Folgenden: 0,4, 0,35, 0,3, 0,25, 0,2, 0,15, 0,1, 0,05. In einer weiteren bevorzugten Ausführungsform nimmt der Querschnitt entlang der Strömungsrichtung des Strömungskanals in der zweiten Position ab. In einer Alternative ist der Verengungskörper als Blende ausgebildet. Eine solche Blende ist vorzugsweise so eingerichtet, dass die Größe der Blendenöffnung variierbar ist. In einer weiteren Alternative weist die Absaugvorrichtung einen Abschnitt auf, der entsprechend einem Quetschventil gestaltet ist, in dem der Strömungskanal ausgebildet ist. So bildet eine innere Wandung des Quetschventils den Verengungskörper. Mittels Zusammendrücken des Quetschventils ist der Strömungskanal dann im Querschnitt verringerbar.

Gemäß einer weiteren bevorzugten Ausführungsform ist der Verengungskörper in eine dritte Position bewegbar, in welcher der Verengungskörper den Strömungskanal verschließt. So entfällt erfindungsgemäß ein zusätzliches Sperrventil, wodurch der Aufbau der Absaugvorrichtung wesentlich vereinfacht wird. Auch wird das Gewicht der erfindungsgemäßen Absaugvorrichtung so verringert. Alternativ ist durch ein Bewegen des Verengungskörpers in eine dritte Position ein Verschlusselement aktivierbar, welches dazu eingerichtet ist, den Strömungskanal zu verschließen.

Weiterhin erfindungsgemäss weist der Verengungskörper eine Ausnehmung auf, die in der zweiten Position des Verengungskörpers mit dem Einlass und dem Auslass fluidleitend verbunden ist. Eine solche Ausnehmung kann beispielsweise als Durchgangsbohrung bzw. als Durchgangskanal in dem Verengungskörper ausgebildet sein. So ist der Strömungskanal in der ersten Position vorzugsweise durch ein Gehäuse begrenzt. In der zweiten Position ist der Strömungskanal vorzugsweise abschnittsweise oder vollständig durch den Verengungskörper begrenzt, während er in der dritten Position mittels des Verengungskörpers vollständig verschlossen ist.

Gemäß einer weiteren bevorzugten Ausführungsform ist die Ausnehmung an einer Umfangsfläche des Verengungskörpers ausgebildet. Vorzugsweise ist die Ausnehmung als Nut ausgebildet. Das Ausbilden der Ausnehmung an der Umfangsfläche beispielsweise als Nut ist eine besonders effektive Möglichkeit, diese Ausnehmung an dem Verengungskörper auszubilden. Alternativ weist der Verengungskörper an einer Umfangsfläche einen Abschnitt auf, der dazu eingerichtet ist, mit einer Gehäusewandung derart zu korrespondieren, dass ein verengter Strömungskanal gebildet wird, insbesondere ein Spalt. Beispielsweise ist die Ausnehmung als Abflachung an dem Verengungskörper ausgebildet. Jegliche Form eines Verengungskörpers, welcher einen Spalt als Strömungskanal zwischen Verengungskörper und beispielsweise einer Wandung eines Gehäuses freilässt bzw. freigibt, soll hier unter Ausnehmung verstanden werden.

Gemäß einer weiteren bevorzugten Ausführungsform ist der Verengungskörper als Kolben ausgebildet. Besonders bevorzugt ist der Verengungskörper als beweglicher Kolben ausgebildet. Dieser Kolben ist vorzugsweise in einem Hohlraum eines Gehäuses einer Absaugvorrichtung entlang seiner Kolbenachse bewegbar. Besonders bevorzugt ist an der Kolbenmantelfläche des Kolbens eine bzw. die Ausnehmung ausgebildet, welche in einer zweiten Position des Kolbens wenigstens abschnittsweise eine Wandung des Strömungskanals bildet.

Gemäß einer weiteren bevorzugten Ausführungsform ist der Verengungskörper zylindrisch ausgebildet und weist Handhabungsmittel auf, mittels derer er mittels Schieben und/oder Drehen entlang bzw. um seine Zylinderachse zwischen der ersten, zweiten und/oder dritten Position bewegbar ist. So ist der Verengungskörper beispielsweise mittels Schieben von der ersten Position in die zweite Position bewegbar und mittels Drehen von der zweiten Position in die dritte Position bewegbar. Alternativ ist der Kolben mittels Schieben von der ersten in die zweite Position bewegbar und mittels Schieben von der zweiten in die dritte Position bewegbar. Weiter alternativ ist der Kolben mittels Drehen von der ersten in die zweite Position bewegbar und mittels Schieben von der zweiten in die dritte Position bewegbar. Weiter alternativ ist der Kolben mittels Drehen zwischen allen drei Positionen bewegbar. Indem der Verengungskörper als zylindrischer Kolben ausgebildet ist, ist das Bewegen in diesen zwei Freiheitsgraden (Drehen, Schieben) möglich, wodurch ein einfaches Handhaben einer erfindungsgemäßen Absaugvorrichtung erreicht wird. Alternative bevorzugte Handhabungsmittel umfassen beispielsweise: Griffe, Schieber, Hebel, Schubgestänge, Seilzüge, Ritzel und Zahnstange oder ähnliches.

Gemäß einer weiteren bevorzugten Ausführungsform weist die Absaugvorrichtung einen in den Strömungskanal mündenden Luft-Einlass auf, der zum selektiven Zuführen von Luft in den Strömungskanal freigebbar oder versperrbar ist. Durch das Zuführen von Luft in den Strömungskanal wird das Ausbilden einer turbulenten Strömung im Strömungskanal weiter verstärkt. Infolge dessen treten noch mehr Verwirbelungen auf, so dass der Strömungskanal und somit die Absaugvorrichtung effektiver von Fäkalienresten befreit wird. Dabei ist die Luft selektiv zuführbar, so dass der Luft-Einlass vorzugsweise während eines Absaugvorgangs geschlossen bleibt und zum Ende hin öffenbar ist. Der Luft-Einlass kann beispielsweise als Öffnung in einem Gehäuse ausgebildet sein, welche mittels einer Klappe, einem Schieber, einem Stopfen oder ähnlichem versperrbar und freigebbar ist. In einer Alternative ist der Luft-Einlass mittels einer schwenkbaren Klappe in einem Gehäuse so freigebbar, dass die Klappe zum bzw. in den Strömungskanal schwenkbar ist. So ist ein Freigeben des Luft-Einlasses mit einem Verengen des Strömungskanals gekoppelt. Alternativ weist die Absaugvorrichtung Mittel auf, welche ein automatisches Freigeben eines Luft-Einlasses vorsehen, falls ein bestimmtes Ereignis eintritt. Ein solches Ereignis kann beispielsweise ein spezieller Füllstand eines Sammelbehälters sein, oder ein spezieller Druck in der Absaugvorrichtung. In einerweiteren Alternative ist der Luft-Einlass so freigebbar und versperrbar, dass ein Volumenstrom an Luft einstellbar ist. Die Größe eines Luft-Einlasses ist dann vorzugsweise so bemessen, dass die Absaugvorrichtung und/oder ein angrenzender Stutzen von Fluidresten befreit wird/werden, jedoch kein zusätzliches Fluid bzw. keine zusätzliche Fäkalie aus einem angrenzenden Sammelbehälter gesaugt wird.

Gemäß einer weiteren bevorzugten Ausführungsform ist der Luft-Einlass als Ausnehmung in dem Verengungskörper ausgebildet und mit einem Luftkanal in dem Verengungskörper verbunden, welcher freigebbar oder versperrbar ist. So ist der Luft-Einlass entsprechend mit dem Verengungskörper gemeinsam bewegbar, relativ zu dem Mischfluid-Einlass und dem Mischfluid-Auslass. Aufgrund der Positionierung des Luft-Einlasses ist die Luft gezielter in den Strömungskanal einleitbar und Restfluid ist folglich effektiver aus der Absaugvorrichtung entfernbar. Bevorzugt ist der Luft-Einlass benachbart zu der Ausnehmung an dem Verengungskörper, welcher eine Begrenzung des Strömungskanals bildet, angeordnet. So ist die Luft noch besser zu dem Strömungskanal leitbar. In einer Alternative ist der Luftkanal mittels der oben genannten Handhabungsmittel freigebbar oder versperrbar. Das Vorsehen eines freigeb- und versperrbaren Luft-Einlasses ist insbesondere in solchen Situationen besonders vorteilhaft, in denen der Absaugvorgang, der mittels der Absaugvorrichtung durchgeführt wird, beendet werden soll, bevor der Sammelbehälter des Fahrzeugs vollständig entleert ist, sodass in jenem Zustand noch vorrangig Mischfluid durch den Strömungskanal gefördert wird und keine oder nur unzureichende Mengen von Luft. Auch bei vollständig entleertem Sammelbehälter des Fahrzeugs ist dieser Luft-Einlass vorteilhaft. Wenngleich auch ohne Vorsehen des Luft-Einlasses bei entleertem Tank das Entfernen von Mischfluid-Resten mittels der im Sammelbehälter befindlichen Luft erfolgreich vorgenommen wird, stellt das zusätzliche Vorsehen des Luft-Einlasses gemäß der Erfindung eine weitere Verbesserung dar, weil zusätzliche Luft zum Entfernen der Mischfluid- bzw. Fäkalien-Reste bereitgestellt wird.

Gemäß einer weiteren bevorzugten Ausführungsform weist die Absaugvorrichtung ein Gehäuse auf, welches eine Ausnehmung aufweist, die in der zweiten Position des Verengungskörpers mit dem Luft-Einlass fluidleitend verbunden ist. Vorzugsweise ist die Ausnehmung in dem Gehäuse ausschließlich in der zweiten Position des Verengungskörpers fluidleitend mit dem Luft-Einlass verbunden. So ist der Luft-Einlass in der ersten Position verschlossen. In der ersten Position des Verengungskörpers ist darüberhinaus vorzugsweise die Querschnittsfläche des Strömungskanals maximal. So ist ein auf den Mischfluid-Auslass beaufschlagtes Vakuum effektiv nutzbar, um einen Sammelbehälter zu entleeren. Ist der Verengungskörper in der zweiten Position angeordnet, ist der Luft-Einlass freigegeben. Zusätzliche Luft kann in den Strömungskanal gelangen und mittels Verwirbelungen und/oder Strömungsbeschleunigungen ein Mitreißen und somit Entfernen von Restfluid aus der Absaugvorrichtung unterstützen. Vorzugsweise ist die Ausnehmung in dem Gehäuse als Bohrung ausgebildet. In einer Alternative weist das Gehäuse mehrere Ausnehmungen auf, vorzugsweise als Bohrung ausgebildet, mit unterschiedlichen Querschnitten, so dass die Luftmenge, welche durch den Luft-Einlass dem Strömungskanal zuführbar ist, einstellbar ist. Durch Bewegen des Verengungskörpers ist dann der Luftkanal, welcher in dem Verengungskörper ausgebildet ist, mit einer entsprechenden Ausnehmung fluidleitend verbindbar. In einer weiteren Alternative ist die Ausnehmung als ein Langloch mit veränderlicher Breite ausgebildet, und der Luftkanal in dem Verengungskörper im Wesentlichen mit einem kreisförmigen Querschnitt. So ist eine Regelung der Luftmenge, welche durch den Luft-Einlass dem Strömungskanal zuführbar ist, über ein entsprechendes Bewegen des Verengungskörpers relativ zu dem Langloch möglich.

Gemäß einer weiteren bevorzugten Ausführungsform weist die Absaugvorrichtung einen Schließkörper zum selektiven Freigeben oder Versperren des Luft-Einlasses auf, welcher zwischen einer Offenstellung und einer Schließstellung hin- und herbewegbar ist. Ein solcher Schließkörper ist bevorzugt als Schieber ausgebildet. Dies ist eine besonders einfache Möglichkeit, ein Freigeben und Versperren eines Luft-Einlasses vorzusehen. Ein solcher Schieber ist vorzugsweise in verschiedenen Zwischenpositionen zu verschieben, so dass die Luftmenge, welche dem Strömungskanal durch einen Luft-Einlass zugeführt ist, einstellbar ist.

In einer bevorzugten Weiterbildung der Erfindung ist der Schließkörper ortsfest zu einem Gehäuse der Vorrichtung angeordnet. Damit ist die Anzahl beweglicher Teile reduziert. Vorzugsweise ist der Verengungskörper sowohl zu dem Gehäuse als auch zu dem Schließkörper relativ bewegbar. Ortsfest bezieht sich auf die äußeren Abmaße des Schließkörpers. Ortsfest schließt hier mit ein, dass der Schließkörper um eine Symmetrieachse bewegbar, insbesondere rotierbar, ist.

Vorzugsweise ist der Schließkörper zumindest teilweise in einer Ausnehmung des Verengungskörpers angeordnet. Bevorzugt ist der Schließkörper wenigstens teilweise in den Verengungskörper integriert. So ist der Schließkörper besser vor äußeren Einflüssen geschützt. Da der Schließkörper eine abdichtende Wirkung haben soll, ist es für die Funktionsfähigkeit der Vorrichtung vorteilhaft, dass der Schließkörper so wenig wie möglich äußeren Einflüssen ausgesetzt ist. Vorzugsweise ist der Schließkörper vollständig in dem Verengungskörper angeordnet und/oder integriert.

Ferner ist es bevorzugt, dass eine Längsachse des Schließkörpers im Wesentlichen koaxial zu einer Längsachse des Verengungskörpers angeordnet ist. So ist der Schließkörper besonders bevorzugt relativ zu dem Verengungskörper bewegbar, bzw. der Verengungskörper relativ zu dem Schließkörper bewegbar. Vorzugsweise ist dabei auch der Kanal in dem Verengungskörper parallel, insbesondere koaxial, in diesem ausgebildet. So ist der Schließkörper auch koaxial zu dem Kanal und dazu angepasst, diesen einfach und effektiv zu verschließen, wodurch auch der Luft-Einlass verschlossen wird.

In einer besonders bevorzugten Ausführungsform ist der Schließkörper über ein Halteelement mit dem Gehäuse verbunden, und das Halteelement bildet zusammen mit einer Ausnehmung an dem Verengungskörper eine Kulissenführung für diesen. Vorzugsweise ist die Kulissenführung derart ausgestaltet, dass der Verengungskörper gleichsam relativ zu dem Gehäuse und dem Schließkörper bewegbar ist. Alternativ wird eine Kulissenführung für den Verengungskörper auch ohne Schließkörper und ohne Halteelement in Verbindung mit einer der oben beschriebenen Ausführungsformen bevorzugt. Indem der Schließkörper mittels eines Halteelements, wie beispielsweise einer oder mehrerer Schrauben, Stifte, Rippen, Nieten etc. mit dem Gehäuse verbunden ist, ist dieser ortsfest zu dem Gehäuse angeordnet. Das Haltelement durchsetzt bevorzugt eine schlitzförmige Ausnehmung des Verengungskörpers, sodass diese mit dem Haltelement als Kulissenführung zusammenwirkt. Dadurch ist der Verengungskörper stets in vorbestimmter Weise relativ zu dem Gehäuse, als auch dem Fluid-Einlass und dem Fluid-Auslass, sowie zu dem Schließkörper bewegbar. Das heißt, der Schließkörper nimmt zu einer bestimmten Stellung des Verengungskörpers zu jedem Zeitpunkt eine vorbestimmte, definierte Position ein. Dadurch ist die Handhabung der Vorrichtung wesentlich vereinfacht.

Ferner ist bevorzugt, dass der Verengungskörper und/oder der Schließkörper Dichtmittel zum fluiddichten, vorzugsweise druckdichten Abdichten der Absaugvorrichtung gegenüber der Umwelt aufweist bzw. aufweisen. Solche Dichtmittel können beispielsweise O-Ringe, X-Ringe oder ähnliches umfassen oder aufweisen. Ferner ist bevorzugt, dass der Mischfluid-Einlass mittels einer Kupplung, vorzugsweise einer Schnellkupplung mit einem Anschluss eines Sammelbehälters verbindbar ist, wobei die Absaugvorrichtung ein erstes Kupplungsteil aufweist, das mit einem zweiten Kupplungsteil des Anschlusses des Sammelbehälters fluiddicht, vorzugsweise druckdicht in Eingriff bringbar ist. Vorzugsweise ist eine solche Kupplung als Hebelarmkupplung ausgebildet, und das erste Kupplungsteil ist als Mutterteil ausgebildet.

Gemäß einem weiteren Aspekt der Erfindung gemäss Anspruch 13 wird die Aufgabe bei einer Absaugstation der eingangs genannten Art zum Abführen eines Mischfluids, insbesondere einer Fäkalie aus einem Sammelbehälter, insbesondere einem Fäkalientank eines Fahrzeugs, mit einem Auffangbehälter für das Mischfluid, einer Saugleitung zum Zuführen des Mischfluids zu dem Auffangbehälter, einer Fördereinheit, die zum Erzeugen eines Unterdrucks in der Saugleitung und Fördern des Mischfluids durch die Saugleitung in den Auffangbehälter eingerichtet ist, und einer mit der Saugleitung verbundenen Absaugvorrichtung zum Abführen des Mischfluids aus dem Sammelbehälter dadurch gelöst, dass die Absaugvorrichtung nach einer der vorstehenden bevorzugten Ausführungsformen ausgebildet ist. Solche Absaugstationen sind beispielsweise an Service-Bahnhöfen für Schienenfahrzeuge oder in Yachthäfen bzw. Werften angeordnet. So kann beispielsweise das Fahrzeug, welches über einen Sammelbehälter, insbesondere einen Fäkalientank, verfügt, an einer solchen Absaugstation vorfahren, und der Sammelbehälter ist mittels der Absaugvorrichtung der Absaugstation entleerbar. Vorzugsweise ist dabei die Fördereinheit als Vakuumpumpe (oder Drehkolbenpumpe) ausgebildet. Als Vakuumpumpe wird vorzugsweise eine Drehkolbenpumpe vorgesehen. Alternativ kommen andere konventionelle Pumpeneinrichtungen zum Einsatz, die zur Unterdruckerzeugung eingerichtet sind. Hinsichtlich der von der erfindungsgemäßen Absaugstation erzielten Vorteile wird auf die obigen Ausführungen zu der erfindungsgemäßen Absaugvorrichtung verwiesen.

Gemäß einem weiteren Aspekt der Erfindung laut Anspruch 14 wird die Aufgabe bei einem Verfahren der eingangs genannten Art zum Abführen eines Mischfluids, insbesondere einer Fäkalie aus einem Sammelbehälter, insbesondere einem Fäkalientank eines Schienenfahrzeugs mittels einer Absaugvorrichtung, welche vorzugsweise gemäß einer der bevorzugten Ausführungsformen einer Absaugvorrichtung gebildet ist, gelöst durch die Schritte: Ankuppeln der Absaugvorrichtung an einen Anschluss des Sammelbehälters; Absaugen des Mischfluids aus dem Sammelbehälter mittels Unterdruck; Verringern eines Querschnitts des Strömungskanals, insbesondere abschnittsweise oder entlang seiner gesamten Länge, mittels eines Verengungskörpers der Absaugvorrichtung; und Abkuppeln der Absaugvorrichtung. Durch das Verringern eines Querschnitts des Strömungskanals wird eine lokale Strömungsbeschleunigung der durch den Strömungskanal strömenden Luft bewirkt, wodurch Mischfluidreste, welche sich in dem Strömungskanal befinden, mitgerissen und entfernt (abgeschlürft) werden. Ferner wird durch die lokale Strömungsbeschleunigung eine Verwirbelung bewirkt, wodurch auch anhaftende Fluidreste entfernbar sind. Dementsprechend wird der Schritt des Verringerns auch als "Schlürfen" bezeichnet. Insbesondere ist bevorzugt, den Schritt des Verringerns bzw. des Schlürfens einzuleiten, wenn der Sammelbehälter geleert ist, so dass Luft, die durch des Belüftungsventil des Sammelbehälters einströmen kann, abgesaugt wird, Unter dem Begriff "geleert" ist im Sinne der Erfindung derjenige Zustand zu verstehen, in dem der Füllstand innerhalb des Sammelbehälters so weit abgesunken ist, dass nur noch überwiegend Luft aus dem Sammelbehälter angesaugt wird, vorzugsweise ausschließlich Luft. So wird erfindungsgemäß eine Absaugvorrichtung, welche zum Abführen des Mischfluids genutzt wird, insbesondere im Kupplungsbereich von Fluidresten befreit. Der Schritt des Verringerns, bzw. des Schlürfens nimmt dabei vorzugsweise einen geringeren Zeitraum in Anspruch als der Schritt des Absaugens. Vorzugsweise ist der verringerte Zustand etwa 2 bis 30 Sekunden zu halten. Anschließend ist die Absaugvorrichtung abzukuppeln. In diesen etwa 2 bis 30 Sekunden ist soviel Restfluid aus der Absaugvorrichtung entfernt, dass diese nach dem Abkuppeln im Wesentlichen tropffrei abkuppelbar ist. Ein Austritt von Fäkalien wird so erfindungsgemäß verhindert oder wenigstens wesentlich verringert.

Gemäß einer ersten bevorzugten Ausführungsform des Verfahrens umfasst dieses den Schritt des Verschließens des Strömungskanals mittels des Verengungskörpers vor dem Schritt des Abkuppelns der Absaugvorrichtung. So wird eine Absaugvorrichtung noch wirkungsvoller gegen einen Austritt von Fluidresten gesichert. Auch durch ein Schütteln der Absaugvorrichtung nach einem Abkuppeln tritt kein Mischfluid aus. Insbesondere ist bevorzugt dieses Verschließen des Strömungskanals mittels des Verengungskörpers zu bewirken. So ist erfindungsgemäß die Durchführung des Verfahrens wesentlich vereinfacht. Vorzugsweise ist der Verengungskörper in drei Positionen bewegbar: Zum Absaugen ist der Verengungskörper in eine erste Position zu bewegen bzw. zu halten, zum Verringern ist der Verengungskörper in eine zweite Position zu bewegen, zum Verschließen des Strömungskanals ist der Verengungskörper in eine dritte Position zu bewegen.

Gemäß einer weiteren bevorzugten Ausführungsform des Verfahrens umfasst das Bewegen des Verengungskörpers ein Drehen und/oder ein Schieben des Verengungskörpers. Drehen und Schieben sind einfache Bewegungsabläufe, die von einem Benutzer des Verfahrens zuverlässig durchführbar sind. Alternativ umfasst das Bewegen Schwenken.

Gemäß einer weiteren bevorzugten Ausführungsform des Verfahrens umfasst das Verringern des Querschnitts ein Schieben des Verengungskörpers und das Verschließen des Strömungskanals umfasst ein Drehen des Verengungskörpers. So ist das Durchführen des Verfahrens weiter vereinfacht. Beispielsweise ist zum Verringern des Querschnitts der Verengungskörper aus der ersten Position in die zweite Position gegen einen Anschlag zu schieben. Zum Verschließen ist der Verengungskörper dann um eine Rotationsachse zu drehen, wobei er wiederum gegen einen Anschlag zu drehen ist. So ist das Verfahren für einen Benutzer einfach durchführbar und wenig fehleranfällig. Insbesondere ist es möglich, das Verfahren einhändig durchzuführen, wenn der Verengungskörper Handhabungsmittel aufweist.

Gemäß einer weiteren bevorzugten Ausführungsform des Verfahrens weist dieses den Schritt des selektiven Zuführens von Luft in den Strömungskanal mittels Freigeben und Versperren eines Lufteinlasses auf. Durch das Zuführen von Luft in den Strömungskanal werden eine stärkere Verwirbelung und eine weitere Strömungsbeschleunigung herbeigeführt, sodass Restfluid, insbesondere auch anhaftendes Restfluid, aus dem Strömungskanal abführbar ist bzw. sind. Insbesondere ist das Freigeben des Lufteinlasses bevorzugt gleichzeitig mit oder während dem Schritt des Verringerns eines Querschnitts des Strömungskanals durchzuführen.

Die Erfindung ist nachstehend anhand eines Ausführungsbeispiels unter Bezugnahme auf die beiliegenden Zeichnungen beschrieben. Es zeigen:
Fig. 1 eine Schnittdarstellung einer erfindungsgemäßen Absaugvorrichtung, welche über einen Rohrstutzen mit einem Sammelbehälter verbunden ist;
Fig. 2a eine Schnittdarstellung einer Absaugvorrichtung mit einem Verengungskörper in einer ersten Position;
Fig. 2b eine Frontalansicht einer Absaugvorrichtung mit einem Verengungskörper in der ersten Position;
Fig. 3a eine Schnittdarstellung einer Absaugvorrichtung mit einem Verengungskörper in einer zweiten Position;
Fig. 3b eine Frontalansicht einer Absaugvorrichtung mit einem Verengungskörper in der zweiten Position;
Fig. 3c eine weitere Schnittdarstellung einer Absaugvorrichtung mit einem Verengungskörper in der zweiten Position;
Fig. 3d eine weitere Frontalansicht einer Absaugvorrichtung mit einem Verengungskörper in der zweiten Position;
Fig. 4a eine Schnittdarstellung einer Absaugvorrichtung mit einem Verengungskörper in einer dritten Position;
Fig. 4b eine Frontalansicht einer Absaugvorrichtung mit einem Verengungskörper in der dritten Position;
Fig. 5a eine Draufsicht einer Absaugvorrichtung mit einem Saugrohrstutzen gemäß einer ersten Ausführungsform;
Fig. 5b eine weitere Draufsicht einer Absaugvorrichtung mit einem Saugrohrstutzen gemäß einer zweiten Ausführungsform;
Fig. 6a eine Frontalansicht einer ersten Alternative eines Verengungskörpers;
Fig. 6b eine Frontalansicht einer zweiten Alternative eines Verengungskörpers;
Fig. 6c eine Frontalsicht einer dritten Alternative eines Verengungskörpers;
Fig. 6d eine Frontalansicht einer vierten Alternative eines Verengungskörpers;
Fig.7 eine Schnittdarstellung einer Absaugvorrichtung gemäß einem weiteren Ausführungsbeispiel in der ersten Position;
Fig.8 eine Schnittdarstellung der Absaugvorrichtung aus Fig. 7 in der zweiten Position;
Fig. 9 eine Schnittdarstellung der Absaugvorrichtung aus den Figuren 7 und 8 in der dritten Position;
Fig.10a eine perspektivische Ansicht eines Verengungskörpers entsprechend dem Ausführungsbeispiel gemäß den Figuren 7 bis 9;
Fig. 10b eine weitere perspektivische Ansicht des Verengungskörpers aus Fig. 10a; und
Fig. 10c eine weitere perspektivische Ansicht des Verengungskörpers aus den Figuren 10a und 10b.

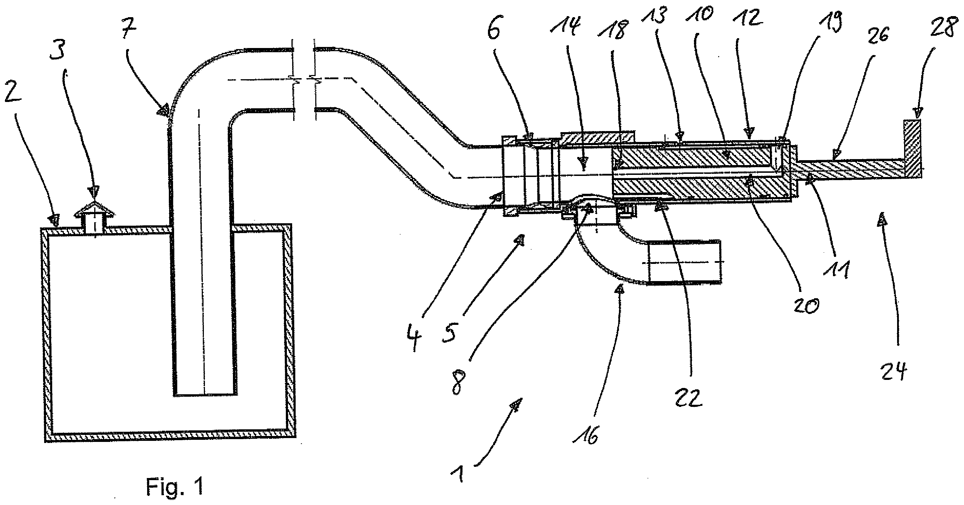

Gemäß Fig. 1 weist eine Absaugvorrichtung 1 zum Abführen eines Mischfluids, insbesondere einer Fäkalie aus einem Sammelbehälter 2, einen Mischfluid-Einlass 4 und einen Mischfluid-Auslass 8 auf. Der Mischfluid-Einlass 4 ist mittels einer Kupplung 5 mit einem Rohrstutzen 6 verbunden. Der Rohrstutzen 6 ist über eine Absaugleitung 7 mit dem Sammelbehälter 2 verbunden. Der Sammelbehälter 2 weist ferner ein Belüftungsventil 3 auf. Die Kupplung 5 ist vorzugsweise als formschlüssige Hebelarm-Kupplung ausgeführt, wobei das Vaterteil der Kupplung 5 am Rohrstutzen 6 ausgebildet ist und das Mutterteil der Kupplung 5 am Mischfluid-Einlass 4. Zwischen dem Mischfluid-Einlass 4 und dem Mischfluid-Auslass 8 erstreckt sich ein Strömungskanal 14, welcher durch ein Gehäuse 12 der Absaugvorrichtung 1 sowie einem beweglich in dem Gehäuse 12 angeordneten Verengungskörper 10 begrenzt ist. Der Mischfluid-Auslass 8 ist mit einem Saugstutzen 16 verbunden, welcher mit einem Schlauch (nicht gezeigt) verbindbar ist, der vorzugsweise zu einem Auffangbehälter führt und mit einer Vakuumpumpe verbunden ist (beides nicht gezeigt). Der Verengungskörper 10 ist gemäß diesem Ausführungsbeispiel als Kolben ausgebildet und koaxial zu seiner Kolbenachse 11 translatorisch beweglich in dem Gehäuse 12 angeordnet. Insbesondere ist der Verengungskörper 10 koaxial zu einer Zentralachse des Mischfluid-Einlasses 4 angeordnet. Der Mischfluid-Auslass 8 ist im Wesentlichen radial bezogen auf den Verengungskörper 10 angeordnet.

An einer dem Mischfluid-Einlass 4 zugewandten Seite des Verengungskörpers 10 ist ein Luft-Einlass 18 zum Zuführen von Luft in den Strömungskanal 14 angeordnet. Dieser Luft-Einlass 18 ist über einen Luftkanal 20 mit einem Kanaleinlass 19 verbunden, welcher in dem Verengungskörper 10 ausgebildet ist. Ferner weist der Verengungskörper an einer dem Mischfluid-Einlass 4 abgewandten Seite Handhabungsmittel 24 auf, um den Verengungskörper 10 relativ zu dem Mischfluid-Einlass 4 und dem Mischfluid-Auslass 8 bzw. zu dem Gehäuse 12 zu bewegen. Die Handhabungsmittel 24 umfassen gemäß diesem Ausführungsbeispiel eine Schubstange 26, die mit einem Handgriff 28 verbunden ist. Ferner weist der Verengungskörper 10 an einer äußeren Mantelfläche eine Ausnehmung 22 auf, die als Schlürfnut 22 ausgebildet ist.

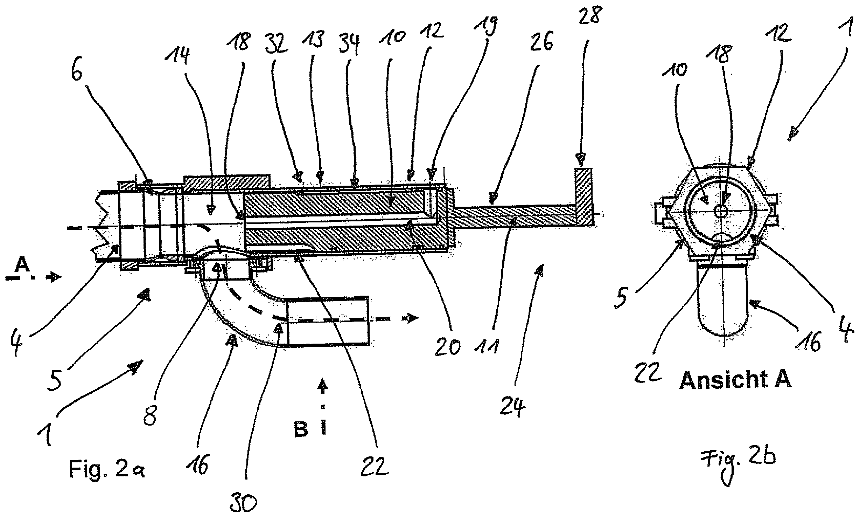

In den Figuren 2a - 4b sind unterschiedliche Betriebszustände der Absaugvorrichtung 1 während eines Absaugvorgangs gezeigt. Die Begriffe "Mischfluid" und "Fäkalie" werden synonym verwendet.

Gemäß Fig. 2a befindet sich der Kolben 10 in der ersten Position. In dieser ersten Position hat der Strömungskanal 14 einen maximalen Querschnitt und ist daher maximal durchlässig, so dass ein Fäkalienstrom 30 von dem Sammelbehälter bzw. Fäkalientank 2 bis in einen Auffangbehälter strömen kann. Der Kanaleinlass 19 des Luftkanals 20 ist in dieser ersten Position durch das Gehäuse 12 verschlossen, so dass der Luft-Einlass 18 versperrt ist. Gemäß diesem Ausführungsbeispiel wird in der ersten Position keine Luft in den Strömungskanal eingeleitet. Der Kolben 10 ist rotatorisch bezogen auf das Gehäuse 12 so angeordnet, dass die Schlürfnut 22 benachbart zu dem Fluid-Auslass 8 angeordnet ist. Diese erste Position des Kolbens 10 wird auch als "Saugstellung" bezeichnet.

Gemäß Ansicht A (Fig. 2b) ist die Absaugvorrichtung 1 aus Richtung des Pfeiles A gemäß Fig. 2a gezeigt. Die Kupplung 5 zwischen Mischfluid-Einlass 4 und Rohrstutzen 6 ist in einem gekoppelten Zustand. Der Luft-Einlass 18 ist um die Zentralachse 11 des Kolbens 10 herum ausgebildet und an der Stirnseite des Kolbens 10 angeordnet. Die Schlürfnut 22 ist gemäß dieser Ausführungsform im Wesentlichen als Ausnehmung mit viertelkreisförmigem Querschnitt an einer Zylindermantelfläche des Kolbens 10 ausgebildet. Sie ist durch eine Abweichung zwischen der Zylindermantelfläche und der korrespondierenden Innenfläche des Gehäuses 12 gebildet. Die Schlürfnut 22 ist benachbart zu dem Mischfluid-Auslass 8 (in Fig. 2a gezeigt) bzw. zu dem Saugstutzen 16 angeordnet. Alternativ ist eine Schlürfnut an dem Gehäuse 12 ausgebildet.

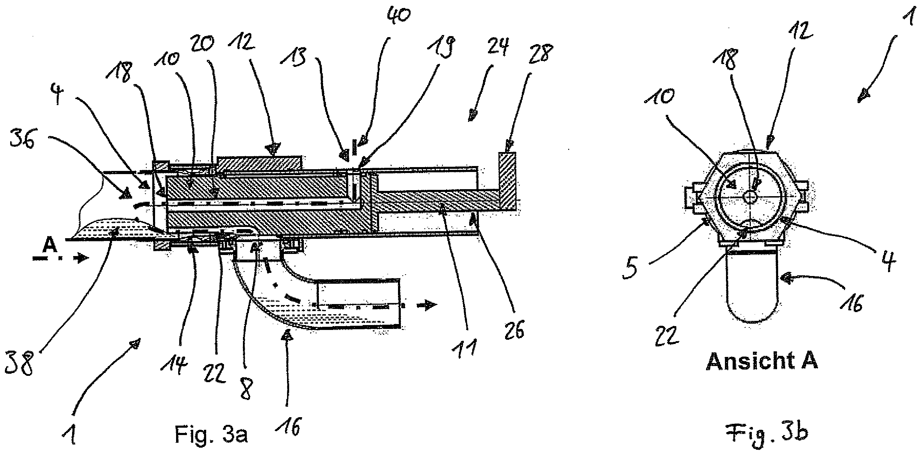

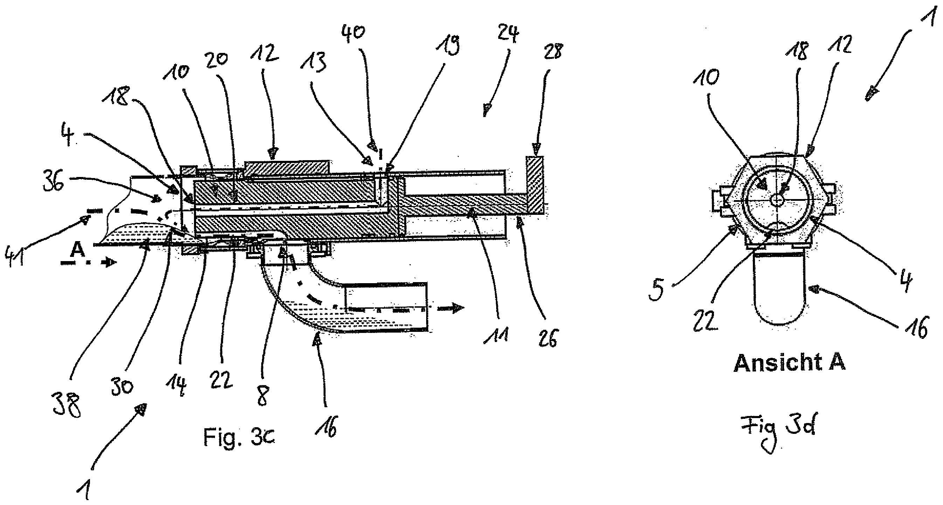

Gemäß den Figuren 3a, 3b, 3c und 3d ist der Kolben 10 in einer zweiten Position bezogen auf den Mischfluid-Einlass 4, den Mischfluid-Auslass 8 und das Gehäuse 12 angeordnet. Diese zweite Position wird auch als "Schlürfstellung" des Kolbens 10 bezeichnet. In dieser zweiten Position ist der Strömungskanal 14 stark verengt, indem der Kolben 10 translatorisch in Richtung des Mischfluid-Einlasses 4 verschoben ist. In diesem Zustand bildet die Schlürfnut 22 eine Wandung für den Strömungskanal 14. Der Strömungskanal 14 ist in dieser zweiten Position im Wesentlichen durch die Abweichung zwischen Zylindermantelfläche und Gehäuse-Innenfläche definiert. Durch die starke Verengung des Strömungskanals 14 wird eine Beschleunigung der Strömung hervorgerufen, wodurch Restfluid 38, welches sich in der Absaugvorrichtung 1 bzw. in dem Rohrstutzen 6 nahe der Absaugvorrichtung 1 und/oder nahe der Kupplung 5 befindet, mitgerissen und entfernt (abgeschlürft) wird. Um diesen (Schlürf)-Vorgang zu unterstützen ist es vorteilhaft, zusätzliche Luft in den Strömungskanal 14 einzuleiten. In dieser zweiten Position des Kolbens 10 decken sich der Kanaleinlass 19 und die Öffnung 13 im Gehäuse 12, so dass der Luft-Einlass 18 luftleitend mit der Gehäuseöffnung 13 verbunden ist und ein Luftstrom 40 in den Strömungskanal 14 gelangt. Dieser Luftstrom (Schlürfluft) führt zu einer stärkeren Verwirbelung in der Verwirbelungszone 36, wodurch Restfluid 38 effektiver aus der Absaugvorrichtung 1 bzw. dem Übergangsbereich zwischen der Stirnfläche des Kolbens 10, dem Mischfluid-Einlass 4, der Kupplung 5 und dem Rohrstutzen 6 abgeführt wird.

Die Frontalansicht auf den Mischfluid-Einlass 4 gemäß Ansicht A (Fig. 3b) deckt sich im Wesentlichen mit der Frontalansicht A (Fig. 2b) in der ersten Position.

Figuren 3a und 3b zeigen den Betrieb der Absaugvorrichtung 1 mit einer Schlürfstellung, wobei der zu entleerende Sammelbehälter 2 nicht vollständig entleert ist. So strömt aus Richtung des Rohrstutzens 6 nur Fäkalie auf den Strömungskanal 14 zu, während die gesamte Schlürfluft durch den Luftkanal 20 zugeführt wird. Dahingegen zeigen Figuren 3c und 3d die Absaugvorrichtung 1 mit dem Kolben 10 in "Schlürfstellung", wobei gemäß den Abbildungen 3c und 3d der zu entleerende Sammelbehälter 2 geleert ist. So strömen aus Richtung des Rohrstutzens 6 durch die Absaugleitung 7 sowohl Fluidreste 38 als auch zusätzliche Schlürfluft 41. Die Schlürfluft 41 gelangt durch das Belüftungsventil 3 in den Sammelbehälter 2. Die Stärke der gestrichelten Linien, welche die Schlürfluftströme 40, 41 andeuten, deuten auch auf das Volumenstromverhältnis zwischen diesen beiden Schlürfluftströmen 40, 41 hin. Ist der Sammelbehälter 2 entleert, gelangt der wesentlich größere Schlürfluftanteil durch die Absaugleitung 7 und den Rohrstutzen 6 zu dem Strömungskanal 14 hin. Dennoch ist es bevorzugt, dass auch ein Schlürfluftstrom 40 hinzuführbar ist, da dieser zu einer stärkeren Verwirbelung in der Verwirbelungszone 36 führt, wodurch Fluidreste 38 effektiv abgeschlürft werden und durch den Strömungskanal 14 entfernt werden. Indem der Luftkanal 20 in dem Kolben 10 und der Luft-Einlass 18 an der Stirnfläche des Kolbens 10 ausgebildet ist, befindet sich der Luft-Einlass 18 bei einer Schlürfstellung des Kolbens nahe dem Fluid-Einlass 4 und die Schlürfluft 40 strömt im Wesentlichen entgegengesetzt der natürlichen Strömung in dem Strömungskanal 14 hinein, so dass eine verstärkte Verwirbelung in der Verwirbelungszone 36 hervorgerufen wird. Durch diese Verwirbelung ist es möglich, auch an einer Gehäuse-Innenwand oder an einer Innenwand des Rohrstutzens 6 anhaftende feste Bestandteile des Mischfluids zu lockern und abzuschlürfen.

Ansicht A (Fig. 3d) zeigt wiederum eine Frontalansicht aus Richtung des Rohrstutzens 6, welche Ansicht A (Fig. 3b) gleicht.

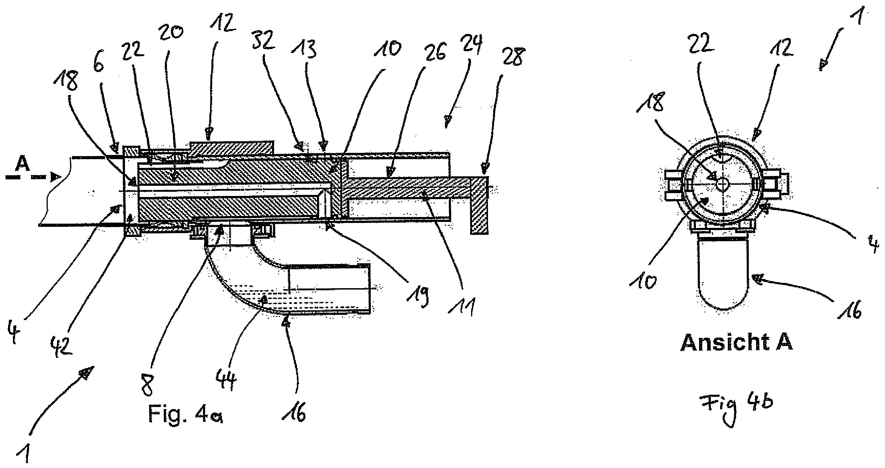

Gemäß den Figuren 4a, 4b ist bei der Absaugvorrichtung 1 der Kolben 10 in einer dritten Position angeordnet, welche auch als "Schließstellung" bezeichnet wird. In dieser Stellung ist der Kolben 10 um etwa 180° um seine Kolbenachse 11 gedreht. Dadurch wird die Schlürfnut 22 weg von dem Mischfluid-Auslass 8 rotiert und der Kolben 10 verschließt den Mischfluid-Auslass 8 mit seiner Mantelfläche. Entsprechend ist auch der Kanaleinlass 19 nicht in luftleitender Verbindung mit der Öffnung 13 in dem Gehäuse 12, so dass keine Luft bzw. Schlürfluft durch den Kanal 20 in die Vorrichtung 1 oder eine Strömungskanal strömen kann. Gemäß dieser dritten Position strömt aus Richtung des Rohrstutzens 6 weder Mischfluid noch Schlürfluft. Indem der Mischfluid-Auslass 8 durch die Mantelfläche des Kolbens 10 verschlossen ist, können auch Fluidreste 44, welche in dem Saugstutzen 16 abgelagert sind, nicht wieder aus diesem austreten. Die translatorische Position des Kolbens 10 bezogen auf das Gehäuse 12 ist in der zweiten und der dritten Position im Wesentlichen identisch, so dass eine Stirnfläche des Kolbens 10 benachbart zu dem Mischfluid-Einlass 4 angeordnet ist. So ist ein Totraum 42 in der Absaugvorrichtung 1 minimiert, und nach einem Abkuppeln des Rohrstutzens 6 von der Absaugvorrichtung 1 treten keine Mischfluid-Reste bzw. Fäkalienreste aus. Indem der Verengungskörper 10 als Kolben 10 ausgebildet ist, werden zusätzliche Vorteile erreicht: So wird durch ein Bewegen des Kolbens 10 von der ersten Position in die zweite Position Mischfluid, welches sich an einer Wandung befindet, zum Mischfluid-Einlass 4 hin abgestreift und kann dort abgeschlürft werden.

Frontalansicht A (Fig. 4b) zeigt eine Frontansicht auf den Mischfluid-Einlass 4, wobei sich der Kolben 10 in "Schließstellung" befindet und die Kupplung 5 außer Eingriff gebracht ist. In dieser Position ist der Saugstutzen 16 sowie die dahinter liegende Leitung, welche zu einem Auffangbehälter führt (nicht gezeigt), verschlossen und weder Fluidreste noch geruchsbehaftete Dämpfe oder ähnliches können aus der Absaugstation austreten.

Die Funktionsweise einer Absaugvorrichtung 1 gemäß diesem Ausführungsbeispiel ist nachstehend anhand der Figuren 2a - 4b beschrieben.

In einem Ruhezustand ist die Absaugvorrichtung 1 abgekoppelt von einem Rohrstutzen 6. Soll ein Absaugvorgang durchgeführt werden, ist daher zunächst die Absaugvorrichtung 1 an einen Rohrstutzen 6 anzukuppeln. Dies ist vorzugsweise mittels der Kupplung 5 zu bewirken, wobei die Kupplung 5 vorzugsweise als Hebelarm-Kupplung ausgebildet ist. Ferner ist der Kolben 10 vor Beginn des Absaugvorgangs in der dritten Position angeordnet. In dieser Position ist der Mischfluid-Auslass 8 verschlossen und es kann durch ein Handhaben der Absaugvorrichtung wie z.B. Heben, Schwenken oder Schütteln kein Mischfluid aus dem Saugstutzen 16 verschüttet werden. Der Kolben 10 weist an einer Mantelfläche eine Führungsnut 34 auf, die dazu eingerichtet ist, mit einem Führungsstift 32, welcher in den Figuren lediglich angedeutet und an dem Gehäuse 12 angeordnet ist, zusammenzuwirken, um den Kolben auf einer bestimmten Bahn führbar zu machen. Die Führungsnut 34 ist in den vorliegenden Figuren gegenüber der Schlürfnut angeordnet, also um 180° versetzt. Alternativ wird die Nut in einem anderen Winkel, beispielsweise in einem Bereich von 90°-175° relativ zu der Schlürfnut angeordnet. Die Führungsnut 34 ist vorzugsweise so ausgebildet, dass der Kolben 10 rein rotatorisch von der zweiten in die dritte Position oder umgekehrt bewegbar ist und rein translatorisch von der zweiten Position in die erste Position und umgekehrt bewegbar ist. Um einen Absaugvorgang mittels der Absaugvorrichtung 1 durchzuführen, ist es daher erforderlich, den Kolben 10, welcher zu Beginn vorzugsweise in der dritten Position angeordnet ist, zunächst in die erste Position zu bringen. Dies kann von einem Bediener leicht mittels der Handhabungsmittel 24 bewirkt werden. Um den Kolben 10 von der dritten Position in die erste Position zu bringen, ist folglich zunächst ein Drehen des Kolbens 10 um seine Kolbenachse 11 erforderlich und anschließend ein Ziehen an dem Griff 28, um den Kolben 10 translatorisch in die erste Position zu bewegen. Ist nun der Saugstutzen 16 mit Unterdruck beaufschlagt, beginnt der Absaugvorgang und ein Mischfluidstrom 30 strömt durch den Strömungskanal 14. Gemäß einer alternativen, nicht gezeigten Ausführungsform ist der als Kolben 10 ausgebildete Verengungskörper in der ersten Position und/oder der zweiten Position und/oder der dritten Position geringfügig, beispielsweise um einige Grad rotatorisch in eine Rastposition bewegbar. Die Rastfunktion wird beispielsweise durch eine zusätzliche Nut und einen Führungsstift oder eine entsprechende Ausbildung der Führungsnut 34 vorgesehen. Das Erreichen dieser Einrastposition ist vorzugsweise federunterstützt, sodass ein selbsttätiges Ausrasten aus der Rastposition erschwert wird. Weiter vorzugsweise sind gemäß alternativer Ausbildung Verriegelungsmittel vorgesehen, um den als Kolben 10 ausgebildeten Verengungskörper in der Rastposition zu arretieren.

Zum Ende des Vorgangs hin oder falls der Vorgang unterbrochen werden soll, ist der Kolben 10 in die zweite Position, also die "Schlürfstellung" zu bringen, die dazu dient, die Absaugvorrichtung 1 von Fluidresten zu säubern. In dieser Position ist der Strömungskanal 14 verengt und Schlürfluft tritt entweder durch das Belüftungsventil 30 des Sammelbehälters 2 oder durch den Luftkanal 20 ein. Da die Schlürfluft eine wesentlich geringere Viskosität als das Mischfluid bzw. die Fäkalie aufweist, wird durch das Bringen des Kolbens 10 in die Schlürfposition der Fäkalienstrom 30 im Wesentlichen unterbrochen und die Schlürfluft 40, 41 erzeugt eine Verwirbelung 36, wodurch Fluidreste 38 abgeschlürft werden. Bei Betrieb ist in dieser Position zu warten, bis sämtliche Reste abgeschlürft sind, was in der Regel etwa 10 - 30 Sek. dauert. Ferner kann der Kolben 10 bei entleertem Sammeltank mittels des Handgriff 28 und der Stange 26 beim Schlürfen hin- und herbewegt werden, um noch stärkere Verwirbelungen zu erzeugen, sowie Fluidreste mit der Kolbenstirnfläche vom Gehäuse 12 zu streifen. Vorzugsweise weist der Kolben 10 hierzu Dichtelemente auf, welche in einer Mantelfläche angeordnet sind. Nachdem die entsprechende Zeit gewartet wurde und sämtliche Fluidreste aus der Absaugvorrichtung 1 abgeschlürft wurden, ist der Kolben 10 mittels Drehen in die "Schließposition" zu bringen, wodurch der Mischfluid-Auslass 8 sowie der Kanaleinlass 19 verschlossen werden. Anschließend ist die Absaugvorrichtung 1 von dem Rohrstutzen 6 abzukuppeln.

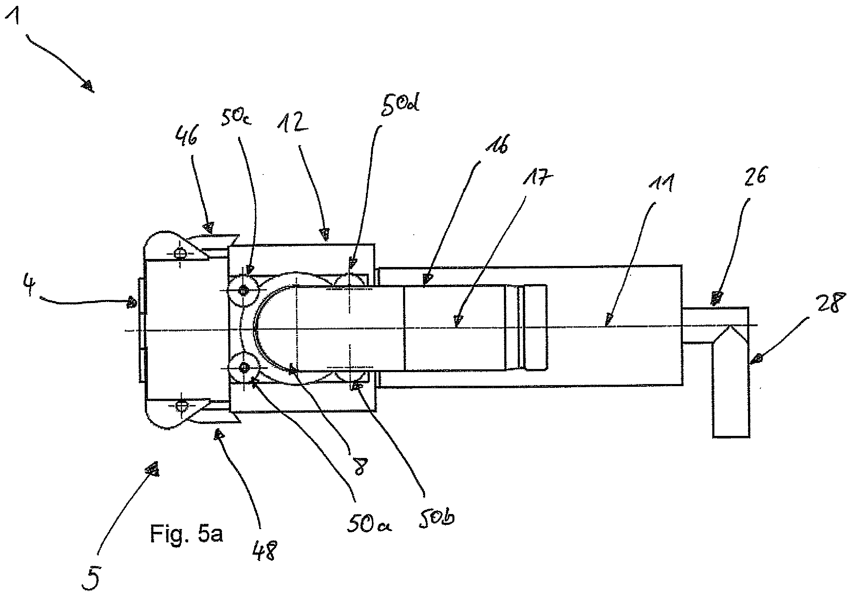

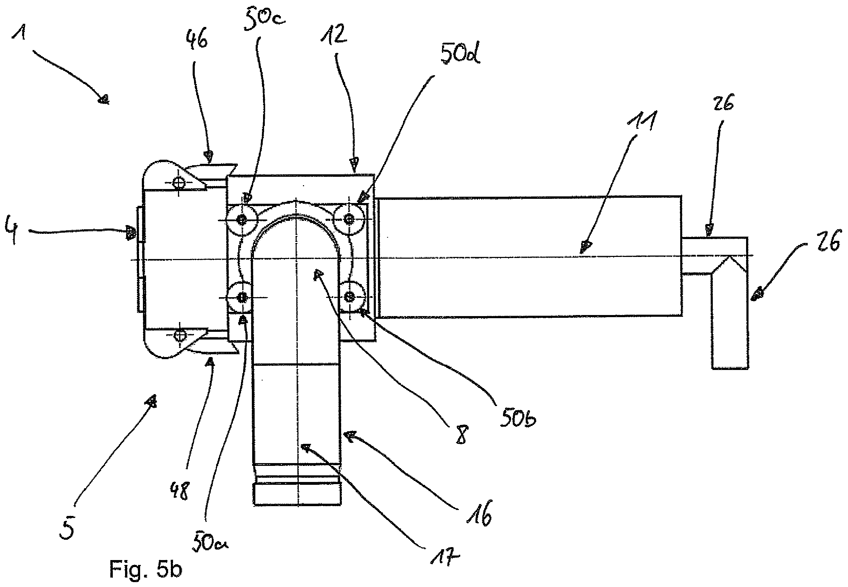

Gemäß der Draufsicht aus Richtung des Mischfluid-Auslasses 8 auf eine Absaugvorrichtung 1 (Fig. 5a) ist in einer ersten Ausführung der Absaugvorrichtung 1 der Saugstutzen 16 mit seiner Zentralachse 17 parallel zu der Längsachse 11 des Kolbens 10 (in Fig. 5a nicht gezeigt) und der Vorrichtung 1 angeordnet. Der Saugstutzen 16 ist im Wesentlichen viertelkreisförmig, vorzugsweise in einem Bereich von 75° - 105°, gekrümmt (Fig. 1 - 4) und weist einen zylindrischen Querschnitt auf. Mit einem ersten Ende ist der Saugstutzen 16 mit dem Mischfluid-Auslass 8 verbunden, vorzugsweise fluiddicht verbunden, und mit einem zweiten Ende mit einem Schlauch verbindbar. Der Saugstutzen 16 ist dabei mittels Befestigungsmitteln 50a, 50b, 50c, 50d an dem Gehäuse 12 der Absaugvorrichtung 1 befestigt. Vorzugsweise ist der Saugstutzen 16 reversibel lösbar mittels dieser Befestigungsmittel 50a, 50b, 50c, 50d befestigt. Die Befestigungsmittel 50a, 50b, 50c, 50d sind zudem so eingerichtet, dass der Saugstutzen 16 in einer Vielzahl von Positionen bezüglich des Mischfluid-Auslasses 8 anordenbar ist. Die Vielzahl von Positionen ist in alternativen Ausführungsformen entweder stufenlos einstellbar oder in vorgegebenen Raststufen. Besonders bevorzugt ist der Saugstutzen 16 stufenlos um jeweils ca. 90° rotatorisch in jede Richtung schwenkbar ausgebildet. Gemäß Fig. 5b ist der Saugstutzen 16 in einer Position angeordnet, bei der die Zentralachse 17 des Saugstutzens 16 im Wesentlichen senkrecht zu der Kolbenachse 11 bzw. der Längsachse zu der Absaugvorrichtung 1 angeordnet. Dadurch ist es einem Bediener möglich, den Saugstutzen 16 stets so anzuordnen, dass die Absaugvorrichtung 1 ergonomisch günstig nutzbar ist und ein Abknicken oder enges Biegen des Schlauchs zum Auffangbehälter vermieden wird.

Ferner weist die Absaugvorrichtung 1 gemäß Figuren 5a und 5b benachbart zu einem Mischfluid-Einlass 4 eine Kupplung 5 auf, welche gemäß diesem Ausführungsbeispiel als Hebelarm-Kupplung zum Verbinden eines Mutterteils mit einem Vaterteil ausgeführt ist. Dazu weist das Mutterteil der Kupplung 5 zwei Hebelarme 46, 48 auf, welche dazu dienen, die Kupplung 5 formschlüssig mit dem Vaterteil der Kupplung am Rohrstutzen 6 zu verbinden.

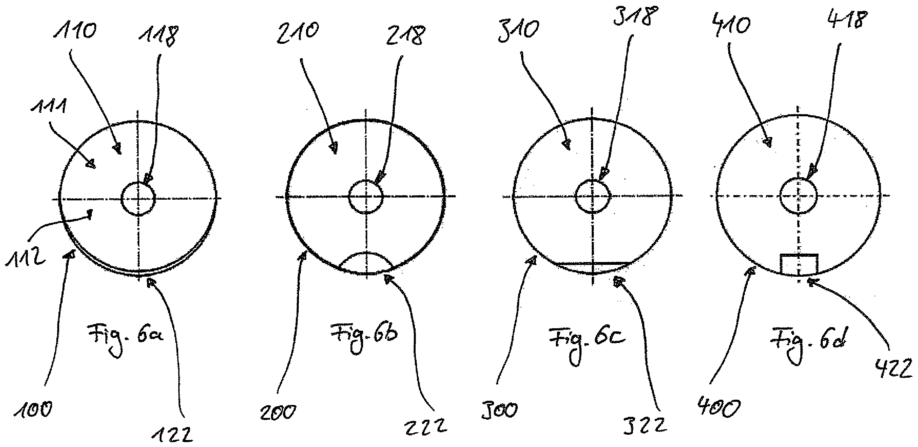

Gemäß den Figuren 6a, 6b, 6c, 6d sind vier alternative Ausführungsformen eines zylindrischen Kolbens 110, 210, 310, 410 mit einer Schlürfnut 122, 222, 322, 422 gezeigt. Demnach ist in einer ersten Ausführungsform bei dem Kolben 110 die Schlürfnut 122 als Spalte ausgebildet. Der Kolben 110 ist hier nur teilweise zylindrisch ausgebildet. Erweist eine erste Hälfte 111 auf, mit einem halbkreisförmigen Querschnitt und eine zweite Hälfte 112, welche einen elliptischen Querschnitt aufweist. Die innere Kontur des Gehäuses 100 ist zylindrisch ausgebildet. So entsteht ein Spalt 122 zwischen Kolben 110 und innerer Wandung des Gehäuses 100, welcher die Schlürfnut 122 bildet.

Gemäß einer zweiten Ausführungsform (Fig. 6b) ist der Kolben 210 im Wesentlichen zylindrisch ausgebildet, und die Innenkontur des Gehäuses 200 ist ebenfalls zylindrisch. Die Schlürfnut 222 ist gemäß diesem Ausführungsbeispiel als Teilkreis bzw. teilzylinderförmige Nut 222 ausgebildet.

Gemäß einem dritten Ausführungsbeispiel (Fig. 6c) ist der Kolben 310 im Wesentlichen zylindrisch ausgebildet, und weist auf einer Seite parallel zu seiner Zentralachse eine plane Abflachung auf. Die Innenkontur des Gehäuses 300 ist zylindrisch. So wird durch die Abweichung der beiden Formen voneinander die Schlürfnut 322 gebildet.

Gemäß einem vierten Ausführungsbeispiel (Fig. 6d) ist der Kolben 410 im Wesentlichen zylindrisch ausgebildet und weist eine Rechtecknut 422 auf. Bei allen vier Ausführungsbeispielen ist der Luft-Einlass 118, 218, 318, 418 koaxial mit der Zentralachse ausgebildet. In einer alternativen Ausführungsform ist der Luft-Einlass 18 in Richtung der Schlürfnut 122, 222, 322, 422 versetzt angeordnet. In einer weiteren alternativen Ausführungsform ist der Luft-Einlass 18 beabstandet von der Schlürfnut 122, 222, 322, 422 angeordnet. In einer weiteren alternativen Ausführungsform sind mehrere Lufteinlässe an dem Kolben 10 ausgebildet.

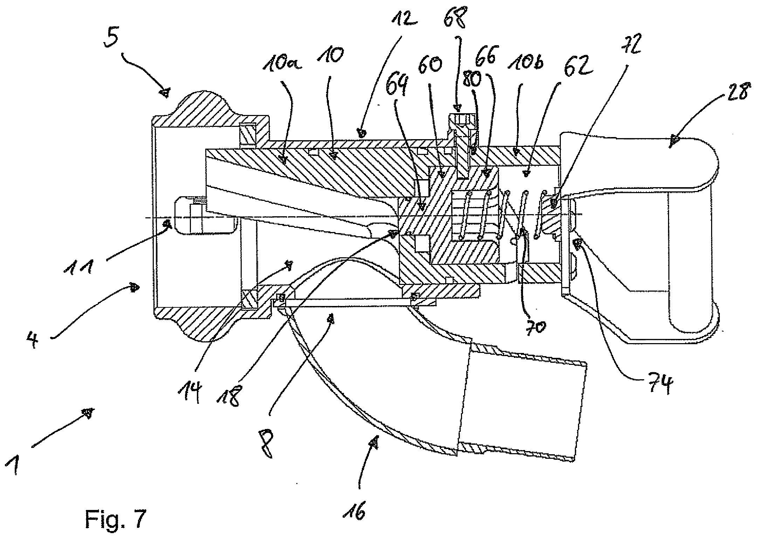

Die Figuren 7 bis 10c zeigen die Absaugvorrichtung 1 bzw. den Kolben 10 in einem weiteren Ausführungsbeispiel. Strukturelle oder funktional gleiche und/oder ähnliche Teile sind mit gleichen oder ähnlichen Bezugszeichen versehen, wo dies als sinnvoll erachtet wurde. Insoweit wird vollumfänglich auf die Ausführungen zu den vorstehenden Figuren und Ausführungsformen Bezug genommen.

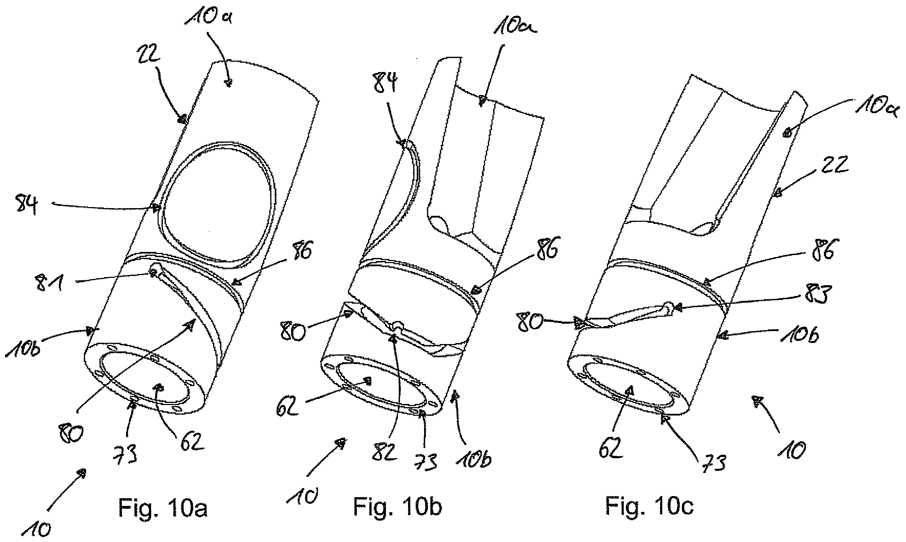

Die Absaugvorrichtung 1 (Figuren 7 bis 9) weist einen Mischfluid-Einlass 4 und einen Mischfluid-Auslass 8 auf. In der Nähe des Mischfluid-Einlasses 4 ist eine Kupplung 5 angeordnet. Die Kupplung 5 ist an dem Gehäuse 12 der Absaugvorrichtung 1 befestigt. In dem Gehäuse 12 ist der im Wesentlichen zylindrische Kolben 10 bewegbar angeordnet, der den Verengungskörper bildet. Der Kolben 10 weist gemäß diesem Ausführungsbeispiel einen vorderen Abschnitt 10a auf, der in etwa schaufelförmig oder schnabelförmig abgeschrägt ausgebildet ist. Die Abschrägung bildet eine Führung für das Mischfluid beim Absaugen aus dem Sammelbehälter 2. In einem hinteren Abschnitt 10b des Kolbens 10 ist eine Ausnehmung 62 angeordnet, die gemäß diesem Ausführungsbeispiel im Wesentlichen zylindrisch ausgebildet ist. In der Ausnehmung 62 ist ein Schließkörper 60 angeordnet. Der Schließkörper 60 weist einen zu dem Mischfluid-Einlass 4 hin ausgerichteten stopfenartigen Vorsprung 64 auf, der einen derartigen Durchmesser aufweist, dass er den Lufteinlass 18, welcher in dem Kolben 10 ausgebildet ist, in einer Schließstellung verschließt. Der Schließkörper 60 ist im Wesentlichen koaxial zu der Längsachse 11 des Kolbens 10 angeordnet. Ferner ist der Schließkörper 60 mittels einer Schraube 68 ortsfest bezogen auf das Gehäuse 12 in der Ausnehmung 62 des Kolbens 10 angeordnet. Auf der dem Mischfluid-Einlass 4 abgewandten Seite des Kolbens 10 ist die Ausnehmung 62 mittels einer Platte 74 verschlossen, an der ein Handgriff 28 befestigt ist. Somit ist der Schließkörper 60 im Wesentlichen derart in den Kolben 10 integriert, dass er von außerhalb der Absaugvorrichtung 1 nicht zugänglich ist. Die Platte 74 ist an Bohrungen 73 des Kolbens 10 befestigt (vergl. auch Figuren 10a bis 10c).

In dem hinteren Abschnitt 10b weist der Kolben eine schlitzförmige, durchgehende Ausnehmung 80 auf (siehe insbesondere Figuren 10a bis 10c). Die Schraube 68, die als Halteelement wirkt und mittels welcher der Schließkörper 60 an dem Gehäuse 12 befestigt ist, erstreckt sich durch diese Ausnehmung 80 hindurch. So wirkt die Ausnehmung 80 mit der Schraube 68 zusammen als Kulissenführung für den Kolben 10. Die schlitzförmige Ausnehmung 80 weist an drei Stellen Ausbuchtungen 81, 82, 83 auf, die als Rastpositionen dienen (siehe Figuren 10a - c). In diese Ausbuchtungen 81, 82, 83 rastet die Schraube 68 beim Erreichen der entsprechenden Position ein. Um das Einrasten zu unterstützen, ist in einer Ausnehmung im hinteren Abschnitt 66 des Schließkörpers 60 eine Feder 70 zwischen dem Schließkörper 60 und einem Halteabschnitt 72 an der Platte 74 angeordnet. Mittels dieser Feder 70, die als Druckfeder ausgebildet ist, wird der Kolben 10 von dem Mischfluid-Einlass 4 weg belastet, so dass die Schraube 68 in die Ausbuchtung 81, 82, 83 einrasten kann. Zudem dient die Feder 70 der Kompensation von Bewegungsspiel in Längsrichtung des Verengungskörpers bzw. Kolbens 10.

An der Umfangsfläche des Kolbens 10 ist zudem eine umlaufende Nut 86 angeordnet, die als Aufnahme für einen O-Ring oder eine sonstige Dichtung dient. Ferner ist eine kreisförmige Nut 84 angeordnet, die ebenfalls als Aufnahme für einen O-Ring zum Abdichten gegenüber dem Mischfluid-Auslass 8 dient, wenn sich der Kolben 10 in der dritten Position befindet.

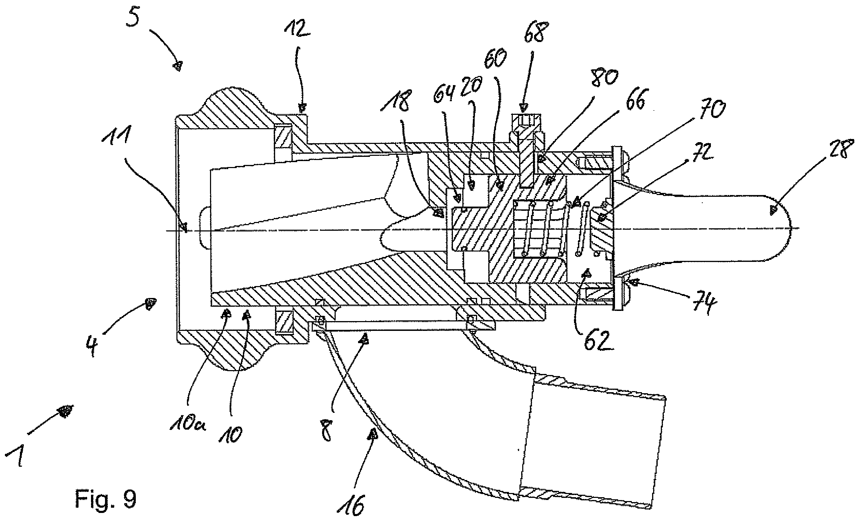

Im Folgenden wird der Betrieb der Absaugvorrichtung gemäß diesem Ausführungsbeispiel (Figuren 7 bis 10c) beschrieben: Vor dem Ankuppeln ist die Absaugvorrichtung 1 geschlossen und der Kolben 10 befindet sich in der dritten Position (wie in Figur 9 gezeigt). In dieser Position ist die Schraube 68 in die Ausbuchtung 83 eingerastet, und der Kolben 10 hat relativ zu dem Schließkörper 60 eine derartige Position, dass der Luftkanal 20 nicht vollständig verschlossen ist. Dadurch ist ein gewisser Luftausgleich möglich, wodurch das Anschließen an der Kupplung 5 erleichtert ist. Alternativ kann der Luftkanal 20 in Position 3 durch den Schließkörper 60 verschlossen sein. Nun wird der Kolben 10 zum Öffnen des Mischfluid-Auslasses 8 mittels des Handgriffs 28 in die erste Position gedreht (wie in Figur 7 gezeigt). Dabei rastet die Schraube 68 in die Ausbuchtung 81 ein. Der Mischfluid-Auslass 8 ist vollständig geöffnet und der Strömungskanal 14 nicht verengt. Der Schließkörper 60 verschließt in dieser Position mittels des stopfenartigen Vorsprungs 64 den Lufteinlass 18. Somit wird in dieser ersten Position keine Schlürfluft zusätzlich hinzugefügt.

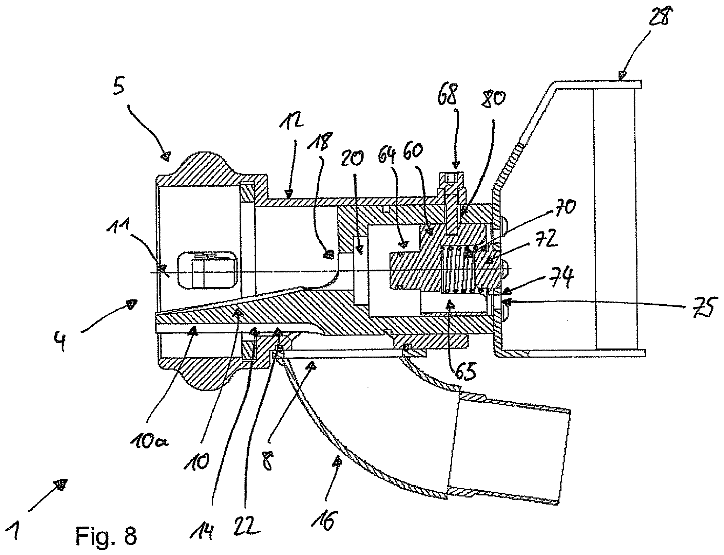

Ist der Sammelbehälter annähernd leer gesaugt, wird der Kolben 10 mittels des Handgriffs 28 in die zweite Position (wie in Figur 8 gezeigt) gebracht, also in die Schlürfposition. In dieser Position ist der Strömungskanal 14 verengt, und die Nut 22 an dem Kolben 10 bildet eine Wandung des Strömungskanals 14. Die Schraube 68 rastet in die Ausbuchtung 82 ein. Der Kolben 10 befindet sich relativ zu dem Schließkörper 60 in einer derartigen Stellung, dass der Lufteinlass 18 vollständig freigegeben ist und zusätzliche Schlürfluft durch eine Öffnung 75 in der Platte 74, durch einen Durchlass 65 in dem Schließkörper und den Luftkanal 20 in das Innere der Absaugvorrichtung 1 strömt und so als Schlürfluft wirkt. Diese Position wird idealerweise mindestens 2, besser ca. 3 Sekunden lang gehalten (oder länger). Anschließend wird der Kolben 10 wiederum mittels des Handgriffs 28 zurück in die dritte Position gebracht, bis die Schraube 68 in die Ausbuchtung 83 einrastet. Anschließend kann die Absaugvorrichtung 1 abgekoppelt werden.

Die Rastposition (82) kann alternativ entfallen oder durch eine derartige Umlenkung ersetzt werden, die ein ungehindertes bzw. Übergehen der Schnüffelstellung (zweite Position) ausschließt. Dies ist beispielsweise mittels einer Kontur- oder Winkeländerung in der Kulissenführung realisierbar, die derart ausgestaltet ist, dass beim Entlangbewegen der Schraube 68 an der Umlenkung ein optisches Feedback erzeugt wird.

## Patentansprüche

1. Absaugvorrichtung (1) zum Abführen eines Mischfluids, insbesondere einer Fäkalie, aus einem Sammelbehälter (2), insbesondere einem Fäkalientank eines Schienenfahrzeugs, mit
- einem Mischfluid-Einlass (4) zur Aufnahme des Mischfluids, der fluidleitend mit einem Anschluss des Sammelbehälters (2) verbindbar ist,
- einem Mischfluid-Auslass (8) zur Abgabe des Mischfluids, der fluidleitend mit einer Saugleitung verbindbar ist, und
- einem Strömungskanal (14), der sich zwischen dem Einlass und dem Auslass erstreckt,
**gekennzeichnet durch** einen Verengungskörper (10), welcher dazu eingerichtet ist, einen Querschnitt des Strömungskanals (14) abschnittsweise oder entlang seiner gesamten Länge zu verringern, wobei
der Verengungskörper (10) relativ zu dem Ein- und/oder Auslass in eine erste und eine zweite Position bewegbar ist, wobei der Querschnitt des Strömungskanals (14) in der zweiten Position geringer ist als in der ersten Position, und
der Verengungskörper (10) eine Ausnehmung (22) aufweist, die in der zweiten Position des Verengungskörpers (10) mit dem Einlass und dem Auslass fluidleitend verbunden ist.

2. Absaugvorrichtung (1) nach Anspruch 1,
**dadurch gekennzeichnet, dass** der Verengungskörper (10) wenigstens abschnittsweise eine Wandung des Strömungskanals (14) bildet.

3. Absaugvorrichtung (1) nach einem der vorstehenden Ansprüche,
**gekennzeichnet durch** eine dritte Position des Verengungskörpers (10), in welcher der Verengungskörper (10) den Strömungskanal (14) verschließt.

4. Absaugvorrichtung (1) nach einem der vorstehenden Ansprüche,
**dadurch gekennzeichnet, dass** die Ausnehmung (22) an einer Umfangsfläche des Verengungskörpers (10) ausgebildet ist.

5. Absaugvorrichtung (1) nach einem der vorstehenden Ansprüche,
**dadurch gekennzeichnet, dass** der Verengungskörper (10) als Kolben ausgebildet ist.

6. Absaugvorrichtung (1) nach Anspruch 5,
**dadurch gekennzeichnet, dass** der Verengungskörper (10) zylindrisch ausgebildet ist und Handhabungsmittel (24) aufweist, mit denen er mittels Schieben und/oder Drehen entlang bzw. um seine Zylinderachse zwischen der ersten, zweiten und/oder dritten Position bewegbar ist.

7. Absaugvorrichtung (1) nach einem der vorstehenden Ansprüche,
**gekennzeichnet durch** einen in den Strömungskanal (14) mündenden Luft-Einlass (18), der zum selektiven Zuführen von Luft in den Strömungskanal (14) freigebbar oder versperrbar ist.

8. Absaugvorrichtung (1) nach Anspruch 7,
**dadurch gekennzeichnet, dass** der Luft-Einlass (18) als Ausnehmung in dem Verengungskörper (10) ausgebildet ist und mit einem Luftkanal (20) in dem Verengungskörper (10) verbunden ist, welcher freigebbar oder versperrbar ist.

9. Absaugvorrichtung (1) nach einem der Ansprüche 7oder 8,
**gekennzeichnet durch** ein Gehäuse (12), welches eine Gehäuseöffnung (13) aufweist, die in der zweiten Position des Verengungskörpers (10) mit dem Luft-Einlass (18) fluidleitend verbunden ist.

10. Absaugvorrichtung (1) nach einem der Ansprüche 7 bis 9,
**gekennzeichnet durch** einen Schließkörper (60) zum selektiven Freigeben oder Versperren des Luft-Einlasses (18), welcher zwischen einer Offenstellung und einer Schließstellung hin- und herbewegbar ist.

11. Absaugvorrichtung (1) nach Anspruch 10,
**dadurch gekennzeichnet, dass** der Schließkörper (60) über ein Halteelement (68) mit dem Gehäuse (12) verbunden ist und das Halteelement (68) zusammen mit einer Ausnehmung (80) an dem Verengungskörper (10) eine Kulissenführung für diesen bildet, sodass der Verengungskörper (10) gleichsam relativ zu dem Gehäuse (12) und dem Schließkörper (60) bewegbar ist.

12. Absaugvorrichtung (1) nach einem der vorstehenden Ansprüche,
**dadurch gekennzeichnet, dass** der Verengungskörper (10) mittels Rastmitteln in der ersten Position und/oder der zweiten Position und/oder dritten Position arretierbar ist.

13. Absaugstation zum Abführen eines Mischfluids, insbesondere einer Fäkalie, aus einem Sammelbehälter (2), insbesondere einem Fäkalientank eines Schienenfahrzeugs, mit
- einem Auffangbehälter für das Mischfluid,
- einer Saugleitung zum Zuführen des Mischfluids zu dem Auffangbehälter,
- einer Fördereinheit, die zum Erzeugen eines Unterdrucks in der Saugleitung und Fördern des Mischfluids durch die Saugleitung in den Auffangbehälter eingerichtet ist, und
- einer mit der Saugleitung verbundenen Absaugvorrichtung (1) zum Abführen des Mischfluids aus dem Sammelbehälter (2),
**dadurch gekennzeichnet, dass** die Absaugvorrichtung (1) nach einem der vorstehenden Ansprüche ausgebildet ist.

14. Verfahren zum Abführen eines Mischfluids, insbesondere einer Fäkalie aus einem Sammelbehälter (2), insbesondere einem Fäkalientank eines Schienenfahrzeugs mittels einer Absaugvorrichtung (1), welche einen Strömungskanal (14) aufweist,
umfassend die Schritte:
- Ankuppeln der Absaugvorrichtung (1) an einen Anschluss (6) des Sammelbehälters (2);
- Absaugen des Mischfluids aus dem Sammelbehälter (2) mittels Unterdruck; und durch die folgenden weiteren Schritte gekennzeichnet:
- Verringern eines Querschnitts des Strömungskanals (14), entweder abschnittsweise oder entlang seiner gesamten Länge, mittels eines Verengungskörpers (10) der Absaugvorrichtung (1), wobei der Verengungskörper (10) relativ zu dem Ein- und/oder Auslass von einer ersten in eine zweite Position bewegt wird, wobei der Querschnitt des Strömungskanals (14) in der zweiten Position geringer ist als in der ersten Position, und
in der zweiten Position des Verengungskörpers (10) der Einlass und der Auslass mittels einer Ausnehmung (22) des Verengungskörpers (10) fluidleitend verbunden sind; und
- Abkuppeln der Absaugvorrichtung (1).

15. Verfahren nach Anspruch 14,
umfassend einen oder beide der Schritte:
- Verschließen des Strömungskanals (14) mittels des Verengungskörpers (10) vor dem Schritt des Abkuppelns der Absaugvorrichtung (1); - selektives Zuführen von Luft in den Strömungskanal (14) mittels Freigeben und Versperren eines Luft-Einlasses (18).

16. Verfahren nach Anspruch 15,
wobei das Bewegen des Verengungskörpers (10) ein Drehen und/oder ein Schieben des Verengungskörpers (10) umfasst, und/oder
wobei das Verringern des Querschnitts ein Schieben des Verengungskörpers (10) umfasst, und das Verschließen des Strömungskanals (14) ein Drehen des Verengungskörpers (10) umfasst.

## Claims

1. A suction device (1) for removing a mixed fluid, in particular fecal matter, from a collecting tank (2), in particular from a sewage tank of a railway vehicle, comprising
- a mixed fluid inlet (4) for receiving the mixed fluid, said mixed fluid inlet (4) being fluidically connectable to a connection port of said collecting tank (2),
- a mixed fluid outlet (8) for discharging the mixed fluid, said mixed fluid outlet (8) being fluidically connectable to a suction line, and
- a flow channel (14) extending between said inlet and said outlet,
**characterized by** a constriction member (10) which is adapted to reduce a cross-section of the flow channel (14) in sections thereof or along the entire length thereof, wherein the constriction member (10) can be moved relative to the inlet and/or outlet into a first and a second position, the cross-section of the flow channel (14) being less in the second position than in the first position, wherein the constriction member (10) has a recess (22) which is in fluidic communication with the inlet and the outlet when the constriction member (10) is in the second position.

2. The suction device (1) according to claim 1,
**characterized in that** the constriction member (10) forms a wall of the flow channel (14) at least in sections thereof.

3. The suction device (1) according to any one of the preceding claims,
**characterized by** a third position of the constriction member (10), in which the constriction member (10) closes the flow channel (14).

4. The suction device (1) according to any one of the preceding claims,
**characterized in that** the recess (22) is formed on a circumferential surface of the constriction member (10).

5. The suction device (1) according to any one of the preceding claims,
**characterized in that** the constriction member (10) is in the form of a piston.

6. The suction device (1) according to claim 5,
**characterized in that** the constriction member (10) is cylindrical in shape and includes a handling means (24) with which it can be moved by being pushed along and/or turned about its cylindrical axis between the first, second and/or third positions.

7. The suction device (1) according to any one of the preceding claims,
**characterized by** an air inlet (18) which opens into the flow channel (14) and which can be released or blocked for selectively feeding air into said flow channel (14).

8. The suction device (1) according to claim 7,
**characterized in that** the air inlet (18) is formed as a recess in the constriction member (10) and is connected to an air passageway (20) in the constriction member (10), which air passageway (20) can be released or blocked.

9. The suction device (1) according to any one of claims 7 to 8,
**characterized by** a housing (12) which has a housing opening (13) in fluidic communication with the air inlet (18) when the constriction member (10) is in the second position.

10. The suction device (1) according to any one of claims 7 to 9,
**characterized by** a closing body (60) for selectively releasing or blocking the air inlet (18) and which can be moved back and forth between an open position and a closed position.

11. The suction device (1) according to claim 10,
**characterized in that** the closing body (60) is connected via a holding member (68) to the housing (12) and that the holding member (68), together with a recess (80) on the constriction member (10), forms a slotted guide for said constriction member (10), such that said constriction member (10) can effectively be moved relative to the housing (12) and the closing body (60).

12. The suction device (1) according to any one of the preceding claims,
**characterized in that** the constriction member (10) can be locked by snap-locking means in the first position and/or the second position and/or the third position.

13. A suction station for removing a mixed fluid, in particular fecal matter, from a collecting tank (2), in particular from a sewage tank of a railway vehicle, comprising
- a holding tank for the mixed fluid,
- a suction line for feeding the mixed fluid to the holding tank,
- a conveyor unit adapted to generate underpressure in the suction line and to convey the mixed fluid through the suction line into the holding tank, and
- a suction device (1) connected to the suction line, for removing the mixed fluid from the collecting tank (2),
**characterized in that** the suction device (1) is embodied according to any one of the preceding claims.

14. A method for removing a mixed fluid, in particular fecal matter, from a collecting tank (2), in particular from a sewage tank of a railway vehicle, by means of a suction device (1) which has a flow channel (14),
said method comprising the steps of:
- coupling the suction device (1) to a connection port (6) of the collecting tank (2);
- sucking the mixed fluid out of the collecting tank (2) by means of negative pressure; and **characterized by** the following steps:
- reducing a cross-section of the flow channel (14), in sections thereof or along its entire length, by means of a constriction member (10) of the suction device (1);
- decoupling the suction device (1).

15. The method according to claim 14,
comprising at least one of the steps of:
- closing the flow channel (14) by means of the constriction member (10) before the step of decoupling the suction device (1);
- selectively feeding air into the flow channel (14) by releasing and blocking an air inlet (18).

16. The method according to claim 15,
wherein of moving the constriction member (10) comprises turning and/or sliding the constriction member (10); and/or
wherein of reducing the cross-section comprises the step of sliding the constriction member (10), and the step of closing the flow channel (14) comprises the step of turning the constriction member (10).

## Revendications

1. Dispositif d'évacuation par aspiration (1) servant à évacuer un fluide mélangé, en particulier des matières fécales, d'un récipient collecteur (2), en particulier d'un réservoir à matières fécales d'un véhicule sur rails, comprenant
- une entrée pour fluide mélangé (4) servant à recevoir le fluide mélangé, qui peut être reliée par conduction de fluide à un raccord du contenant collecteur (2),
- une sortie pour fluide mélangé (8) servant à distribuer le fluide mélangé, qui peut être reliée par conduction de fluide à un conduit d'aspiration, et
- un canal d'écoulement (14), qui s'étend entre l'entrée et la sortie,
**caractérisé par** un corps de rétrécissement (10), qui est mis au point afin de réduire par endroits ou le long de sa longueur totale une section transversale du canal d'écoulement (14), dans lequel
le corps de rétrécissement (10) peut être déplacé dans une première et une deuxième position par rapport à l'entrée et/ou à la sortie, dans lequel la section transversale du canal d'écoulement (14) est plus petite dans la deuxième position que dans la première position, et le corps de rétrécissement (10) présente un évidement (22), qui est relié par conduction de fluide dans la deuxième position du corps de rétrécissement (10) à l'entrée et à la sortie.

2. Dispositif d'évacuation par aspiration (1) selon la revendication 1,
**caractérisé en ce que** le corps de rétrécissement (10) forme au moins par endroits une paroi du canal d'écoulement (14).

3. Dispositif d'évacuation par aspiration (1) selon l'une quelconque des revendications précédentes,
**caractérisé par** une troisième position du corps de rétrécissement (10), dans lequel le corps de rétrécissement (10) ferme le canal d'écoulement (14).

4. Dispositif d'évacuation par aspiration (1) selon l'une quelconque des revendications précédentes,
**caractérisé en ce que** l'évidement (22) est réalisé au niveau d'une surface périphérique du corps de rétrécissement (10).

5. Dispositif d'évacuation par aspiration (1) selon l'une quelconque des revendications précédentes,
**caractérisé en ce que** le corps de rétrécissement (10) est réalisé sous la forme d'un piston.

6. Dispositif d'évacuation par aspiration (1) selon la revendication 5,
**caractérisé en ce que** le corps de rétrécissement (10) est réalisé de manière cylindrique et présente de moyens de manutention (24), à l'aide desquels il peut être déplacé au moyen d'un glissement et/ou d'une rotation le long ou autour de son axe de cylindre entre la première, la deuxième et/ou la troisième position.

7. Dispositif d'évacuation par aspiration (1) selon l'une quelconque des revendications précédentes,
**caractérisé par** une entrée d'air (18) débouchant dans le canal d'écoulement (14), laquelle peut être dégagée ou bloquée aux fins de l'amenée sélective d'air dans le canal d'écoulement (14).

8. Dispositif d'évacuation par aspiration (1) selon la revendication 7,
**caractérisé en ce que** l'entrée d'air (18) est réalisée sous la forme d'un évidement dans le corps de rétrécissement (10) et est reliée à un canal d'air (20) dans le corps de rétrécissement (10), lequel peut être dégagé ou bloqué.

9. Dispositif d'évacuation par aspiration (1) selon l'une quelconque des revendications 7 ou 8,
**caractérisé par** un boîtier (12), qui présente une ouverture de boîtier (13), qui est reliée par conduction de fluide à l'entrée d'air (18) dans la deuxième position du corps de rétrécissement (10).

10. Dispositif d'évacuation par aspiration (1) selon l'une quelconque des revendications 7 à 9,
**caractérisé par** un corps de fermeture (60) servant à dégager ou à bloquer de manière sélective l'entrée d'air (18), qui peut effectuer des mouvements de va-et-vient entre une position ouverte et une position de fermeture.

11. Dispositif d'évacuation par aspiration (1) selon la revendication 10,
**caractérisé en ce que** le corps de fermeture (60) est relié, par l'intermédiaire d'un élément de maintien (68), au boîtier (12), et que l'élément de maintien (68) forme, conjointement avec un évidement (80) au niveau du corps de rétrécissement (10), un guidage à coulisse pour ce dernier si bien que le corps de rétrécissement (10) peut être déplacé d'une certaine manière par rapport au boîtier (12) et au corps de fermeture (60).

12. Dispositif d'évacuation par aspiration (1) selon l'une quelconque des revendications précédentes,
**caractérisé en ce que** le corps de rétrécissement (10) peut être arrêté au moyen de moyens d'enclenchement dans la première position et/ou dans la deuxième position et/ou dans la troisième position.

13. Station d'évacuation par aspiration servant à évacuer un fluide mélangé, en particulier des matières fécales, provenant d'un contenant collecteur (2), en particulier d'un réservoir de matières fécales d'un véhicule sur rails, comprenant
- un réceptacle pour le fluide mélangé,
- un conduit d'aspiration servant à amener le fluide mélangé au réceptacle,
- une unité de transport, qui est mise au point afin de produire un vide dans le conduit d'aspiration et servant à transporter le fluide mélangé à travers le conduit d'aspiration dans le réceptacle, et
- un dispositif d'évacuation par aspiration (1) relié au conduit d'aspiration, servant à évacuer le fluide mélangé provenant du contenant collecteur (2),
**caractérisée en ce que** le dispositif d'évacuation par aspiration (1) est réalisé selon l'une quelconque des revendications précédentes.

14. Procédé servant à évacuer un fluide mélangé, en particulier des matières fécales provenant d'un contenant collecteur (2), en particulier d'un réservoir de matières fécales d'un véhicule sur rails au moyen d'un dispositif d'évacuation par aspiration (1), qui présente un canal d'écoulement (14),
comprenant les étapes suivantes :
- l'accouplement du dispositif d'évacuation par aspiration (1) à un raccordement (6) du contenant collecteur (2) ;
- l'évacuation par aspiration du fluide mélangé provenant du contenant collecteur (2) au moyen d'un vide ; et
qui est **caractérisé par** les autres étapes suivantes :
- la réduction d'une section transversale du canal d'écoulement (14), soit par endroits soit le long de sa longueur totale, au moyen d'un corps de rétrécissement (10) du dispositif d'évacuation par aspiration (1), dans lequel le corps de rétrécissement (10) est déplacé, par rapport à l'entrée et/ou à la sortie, d'une première dans une deuxième position, dans lequel la section transversale du canal d'écoulement (14) est plus petite dans la deuxième position que dans la première position, et
l'entrée et la sortie sont reliées par conduction de fluide au moyen d'un évidement (22) du corps de rétrécissement (10) dans la deuxième position du corps de rétrécissement (10) ; et
- le découplage du dispositif d'évacuation par aspiration (1).

15. Procédé selon la revendication 14,
comprenant une étape ou les deux des étapes suivantes :
- la fermeture du canal d'écoulement (14) au moyen du corps de rétrécissement (10) avant l'étape du découplage du dispositif d'évacuation par aspiration (1) ; - l'amenée sélective d'air dans le canal d'écoulement (14) au moyen du dégagement et du blocage d'une entrée d'air (18).

16. Procédé selon la revendication 15,
dans lequel le déplacement du corps de rétrécissement (10) comprend une rotation et/ou un glissement du corps de rétrécissement (10), et/ou
dans lequel la réduction de la section transversale comprend un glissement du corps de rétrécissement (10) et la fermeture du canal d'écoulement (14) comprend une rotation du corps de rétrécissement (10).
